# EUROPÄISCHE PATENTSCHRIFT

(11) **EP 2 739 167 B1**
(45) Veröffentlichungstag und Bekanntmachung des Hinweises auf die Patenterteilung: **15.04.2020**
(21) Anmeldenummer: 12741245.0
(22) Anmeldetag: 13.07.2012
(51) Int. Cl.: B65B 19/30, G01N 21/88, G01N 21/93, G01N 21/95, G07C 3/14

(54) **VERFAHREN UND VORRICHTUNG ZUR OPTISCHEN PRÜFUNG VON BEI DER HERSTELLUNG UND/ODER VERPACKUNG VON ZIGARETTEN ZU PRÜFENDEN OBJEKTEN**
METHOD AND DEVICE FOR VISUALLY INSPECTING OBJECTS TO BE TESTED DURING THE PRODUCTION AND/OR PACKAGING OF CIGARETTES
PROCÉDÉ ET DISPOSITIF DE CONTRÔLE OPTIQUE D'OBJETS À CONTRÔLER LORS DE LA FABRICATION ET/OU DE L'EMBALLAGE DE CIGARETTES

(30) Priorität: 02.08.2011 DE 102011109143; 17.09.2011 DE 102011113704
(43) Veröffentlichungstag der Anmeldung: 11.06.2014
(73) Patentinhaber: Focke & Co. (GmbH & Co. KG), 27283 Verden (DE)
(72) Erfinder: KRAL, Vincent, 28203 Bremen (DE); CZARNOTTA, Michael, 28279 Bremen (DE)
(74) Vertreter: Aulich, Martin
(86) Internationale Anmeldenummer: PCT/EP2012/002951
(87) Internationale Veröffentlichungsnummer: WO 2013/017198

(56) Entgegenhaltungen:
- EP-A1- 1 588 945
- DE-A1-102008 020 239
- JP-A- 3 081 603
- US-A- 5 353 356
- US-A- 5 392 359

## Beschreibung

Die Erfindung betrifft ein Verfahren zur optischen Prüfung von bei der Herstellung und/oder Verpackung von Zigaretten zu prüfenden Objekten - Prüfobjekte - mit Hilfe einer geeigneten Prüfvorrichtung, insbesondere von Zigarettenpackungen und/oder Zuschnitten für Zigarettenpackungen und/oder Aufdrucken und/oder Druckträgern auf oder für Zigarettenpackungen. Die Erfindung betrifft des Weiteren eine Vorrichtung zur Durchführung eines solchen Verfahrens.

Zigarettenverpackungen werden während des Produktionsprozesses mit geeigneten Prüfvorrichtungen geprüft. Solche Prüfvorrichtungen umfassen in der Regel Kameras, die Bilder von den Packungen aufnehmen und mittels geeigneter Verfahren Packungsfehler erkennen. Die Fertigung von Zigaretten erfordert zunehmend eine schnelle, wirtschaftliche Anpassung an unterschiedliche Produkte. Beispielsweise ist es erforderlich, zur Produktion unterschiedlicher Produkte bzw. Marken auf ein und derselben Zigarettenverpackungsmaschine unterschiedliche Zigarettenverpackungen zu produzieren. Dabei müssen die einzelnen Aggregate der Verpackungsmaschine aufwändig an die neu zu produzierende Packung angepasst werden. Ähnliches gilt für die vorgenannten Prüfvorrichtungen.

Aus dem Stand der Technik ist es bekannt, zu einzelnen Produktarten bzw. Marken Maschinenparameter der Verpackungsmaschine zu hinterlegen, die im Falle eines Produktwechsels abrufbar sind. Grundsätzlich ist zwar denkbar, solche Merkmalswerte auch speziell für Prüfvorrichtungen zu hinterlegen. Mit anderen Worten würde bei einem Markenwechsel auf zu der neuen Marke hinterlegte Merkmalswerte für die Prüfvorrichtung zurückgegriffen werden. Dieses Vorgehen wäre allerdings bereits dann nicht mehr anwendbar, wenn eine bestimmte Marke erstmalig auf einer Verpackungsmaschine produziert werden soll. Auf zu der Marke hinterlegte Merkmalswerte kann in einem solchen Fall noch nicht zurückgegriffen werden. Die Prüfvorrichtung müsste in einem solchen wiederum aufwändig "von Hand" eingerichtet werden. Dies erfordert von der Person, die die Einrichtung vornimmt, ein erhebliches Know-How und eine umfassende Erfahrung.

Aus der US 5,353,356 ist es bekannt, ein elektronisches Referenzprüfobjekt bereitzustellen, anhand dessen Prüfungen produzierten Produkte durchgeführt werden. Dieses kann ein von einer Kamera einer Prüfvorrichtung aufgenommenes Bild einer als ideal angesehenen Zigarettenpackung sein.

Ausgehend hiervon ist es Aufgabe der vorliegenden Erfindung, das Verfahren und die Vorrichtung der eingangs genannten Art weiterzuentwickeln, insbesondere im Hinblick auf eine vereinfachte Einrichtung der Prüfvorrichtung bei Produktwechseln.

Diese Aufgabe wird gelöst durch ein Verfahren mit den Merkmalen des Anspruchs 1 bzw. 10 sowie durch eine Vorrichtung mit den Merkmalen des Anspruchs 14.

Es ist demnach vorgesehen, dass im Einrichtbetrieb der Prüfvorrichtung - in der Regel vor Beginn der Produktion der zu prüfenden Prüfobjekte - die Steuerung der Prüfvorrichtung dafür sorgt, dass einem Benutzer auf einem Anzeigemittel, etwa einem Bildschirm, zu mindestens einem das Prüfobjekt, insbesondere in optischer Hinsicht, charakterisierenden Merkmal ein Satz von zu dem entsprechenden Merkmal in einem Datenspeicher hinterlegten Merkmalswertalternativen angezeigt wird.

Mittels einer Eingabeeinrichtung, etwa einer Tastatur oder einem Zeigegerät, wählt dann der Benutzer einen der angezeigten Merkmalswerte des Satzes von Merkmalswertalternativen aus.

Die Steuerung richtet die Prüfvorrichtung dann automatisch ein bzw. stellt diese ein, wobei die Auswahl des Merkmalswertes durch den Bediener diese Einrichtung beeinflusst. Letztlich ist die Einrichtung der Prüfvorrichtung unmittelbar oder mittelbar abhängig von der ausgewählten Merkmalswertalternative.

In der Regel zeigt die Steuerung dem Benutzer erfindungsgemäß nicht nur ein Merkmal mit entsprechenden Merkmalswertalternativen an, sondern mehrere das Prüfobjekt charakterisierende Merkmale, zu denen dann jeweils ein separater Satz von Merkmalswertalternativen dargestellt wird. In diesem Fall wäre die Einrichtung nicht nur von dem ausgewählten Merkmalswert eines Merkmals abhängig, sondern von den bzw. sämtlichen ausgewählten Merkmalswerten der mehreren Merkmale.

Was die Einrichtung der Prüfvorrichtung durch die Steuerung betrifft, so kann insbesondere eine Auswerteinrichtung der Prüfvorrichtung und/oder eine Beleuchtungseinrichtung der Prüfvorrichtung und/oder ein geeigneter Lichtdetektor der Prüfvorrichtung, wie etwa ein optoelektronisches Prüforgan, in der Regel eine elektronische Kamera, entsprechend eingerichtet werden.

Später werden die üblicherweise erstmalig produzierten Prüfobjekte dann in an sich bekannter Weise mit der auf diese Weise eingerichteten Prüfvorrichtung geprüft. Die Prüfung der Prüfobjekte erfolgt in der Regel - dies ist aber nicht zwingend - während des Fertigungsprozesses der Prüfobjekte.

Beispielsweise kann die Prüfvorrichtung Zigarettenpackungen prüfen, etwa auf der Zigarettenpackung aufliegende Banderolen, während die Zigarettenpackungen mit einer geeigneten Verpackungsmaschine hergestellt werden.

Die das Prüfobjekt charakterisierenden Merkmale, die dem Benutzer angezeigt werden und deren jeweilige Merkmalswerte der Benutzer anhand einer jeweiligen Liste von Merkmalswertalternativen bestimmen muss, umfassen allgemein gesprochen Merkmale, die Einfluss auf die nachfolgende Einrichtung der Prüfvorrichtung haben bzw. die für die Einrichtung der Prüfvorrichtung wichtig sind.

Bevorzugt handelt es sich um Merkmale, die optisch von dem Lichtdetektor der Prüfvorrichtung erfassbar sind und in der Regel von der Auswerteeinrichtung der Prüfvorrichtung mit geeigneten Bildauswerteverfahren analysierbar sind.

Beispielsweise kann es bei der optischen Prüfung einer erstmalig zu produzierenden Zigarettenpackung wichtig sein, die Prüfvorrichtung an die jeweils an der zu prüfenden Zigarettenpackung angeordnete Banderole anzupassen. Unmittelbar oder mittelbar abhängig von der angeordneten Banderole kann die Steuerung beispielsweise die Empfindlichkeit einer auf die Banderole gerichteten Kamera der Prüfvorrichtung einstellen oder die Beleuchtungsstärke einer die Banderole ausleuchtenden Beleuchtungseinrichtung oder andere Betriebsparameter der Prüfvorrichtung.

Einem Benutzer, der die Prüfvorrichtung einrichtet, kann dabei die Steuerung beispielsweise als Merkmalswertalternativen einen Satz von verschiedenen Kombinationen von Oberseiten von Zigarettenpackungen mit darauf angeordneten Banderolen auswählbar anzeigen. Ein anderes Beispiel wäre, dass die Steuerung als Satz von Merkmalswertalternativen einen Satz von verschiedenen Kombinationen von Bodenseiten mit Bodenfaltung auswählbar anzeigt, wobei sich die Bodenseiten und/oder die Bodenfaltung der einzelnen Alternativen unterscheiden.

Dabei unterscheiden sich die Banderolen und/oder die Packungsoberseiten bzw. die Bodenseiten und/oder die Bodenfaltungen der einzelnen Alternativen insbesondere in Form bzw. Gestalt, insbesondere in deren Randkantenkonturen, und/oder in deren Farbe und/oder in deren Position oder in weiteren optischen Merkmalen.

Die angezeigten Merkmalswerte des jeweiligen Satzes von Merkmalswertalternativen umfassen dabei jeweils mindestens einen Merkmalswert, der dem entsprechenden Merkmalswert, den das jeweilige neu zu prüfende Prüfobjekt aufweist, entspricht oder der besonders ähnlich zu diesem ist. Diesen kann der Benutzer dann auswählen.

In einer besonders bevorzugten Ausführungsform der Erfindung wählt die Steuerung der Prüfvorrichtung nach Maßgabe des von dem Benutzer ausgewählten Merkmalswerts aus einer in einem Datenspeicher hinterlegten (Maximal-)Anzahl von Prüfmethoden, mit denen Prüfobjekte mit der Prüfvorrichtung geprüft werden können, automatisch mindestens eine für das zu prüfende Prüfobjekt geeignete Prüfmethode aus. Insofern - wie weiter oben beschrieben - von dem Benutzer Merkmalswerte für mehrere verschiedene Merkmale ausgewählt wurden, erfolgt diese Auswahl durch die Steuerung nach Maßgabe der mehreren ausgewählten Merkmalswerte bzw. der Kombination ausgewählter Merkmalswerte,

Alternativ kann die Steuerung dem Benutzer auf dem Anzeigemittel zunächst nach Maßgabe des ausgewählten Merkmalswerts bzw. der Kombination der ausgewählten Merkmalswerte aus der (Maximal-)Anzahl von hinterlegten Prüfmethoden (nur) die für das ausgewählte Merkmal bzw. die ausgewählte Merkmalswertkombination geeigneten Prüfmethoden auswählbar anzeigen. Aus den von der Steuerung auf diese Weise vorausgewählten, auf dem Anzeigemittel angezeigten Prüfmethoden kann der Benutzer dann eine oder mehrere Prüfmethoden auswählen.

Nach Maßgabe der entweder automatisch unmittelbar von der Steuerung oder in der beschriebenen Weise nach Auswahl durch den Benutzter ausgewählten Prüfmethode erfolgt später die Prüfung der Prüfobjekte.

Die Prüfmethoden umfassen in der Regel mindestens Prüfalgorithmen, insbesondere Bildauswerteverfahren, mithilfe derer die Auswerteeinrichtung der Prüfvorrichtung eine Auswertung von im Rahmen der Prüfung der Prüfobjekte von der Prüfvorrichtung aufgenommenen Bildern der Prüfobjekte vornimmt. Beispielsweise können mit der Prüfvorrichtung während der Prüfung Bilder der Prüfobjekte aufgenommen werden, die mit der Auswerteeinrichtung der Prüfvorrichtung mithilfe der Prüfmethoden ausgewertet werden. Die Auswerteeinrichtung verwendet dabei Prüfmethoden, die geeignete, softwaretechnische bzw. elektronische Bildauswerteverfahren umfassen.

Die aufgenommenen Bilder könnten beispielsweise gemäß einer ersten Prüfmethode zur Erkennung von Fehlern der Prüfobjekte mit hinterlegten Referenzbildern verglichen werden. Zudem könnte die Lage bzw. Position von Objekten in den aufgenommen Bildern mit einer zweiten Prüfmethode bzw. einem Bildauswerteverfahren der zweiten Prüfmethode ermittelt bzw. überprüft werden. Eine solche Prüfmethode könnte konkret beispielsweise die Überprüfung der korrekten Lage bzw. der korrekten Position der Kanten einer Banderole auf einer Oberseite einer Zigarettenpackung umfassen.

In dem vorgenannten Beispiel ist letztlich die Einrichtung der Prüfvorrichtung, nämlich in diesem Fall die Einrichtung der Auswerteeinrichtung der Prüfvorrichtung, mittelbar abhängig von der Auswahl des oder der Merkmalswerte durch den Benutzer. Denn diese Auswahl beeinflusst zunächst die Art der Prüfmethoden, die von der Steuerung entweder direkt ausgewählt oder im Rahmen der beschriebenen Vorauswahl auf dem Anzeigemittel angezeigt werden. Die letztlich (durch den Benutzer oder durch die Steuerung) endgültig ausgewählte(n) Prüfmethode(n) wiederum beeinflusst/beeinflussen die Einrichtung der Auswerteeinrichtung, indem diese im Rahmen der Prüfvorgänge der Prüfobjekte diese Prüfmethoden bzw. den Prüfmethoden zugeordnete Prüfalgorithmen verwendet/ verwenden.

In weiterer Ausbildung der Erfindung wählt die Steuerung der Prüfvorrichtung Parameter, die von der Prüfvorrichtung im Rahmen der späteren Prüfung der Prüfobjekte verwendet werden, zuvor nach Maßgabe der mindestens einen, automatisch oder von dem Benutzer ausgewählten Prüfmethode aus einer Anzahl von jeweils für die Prüfvorrichtung in einem Datenspeicher hinterlegten Parametern aus und übermittelt diese an die Prüfvorrichtung. Bei solchen Parametern kann es sich beispielsweise um Einstellparameter für die Beleuchtungseinrichtung und/oder den Lichtdetektor der Prüfvorrichtung handeln. Alternativ oder zusätzlich kann es sich um Parameter handeln, die die Auswerteeinrichtung im Rahmen der Prüfung der Prüfobjekte für eine Bildauswertung der von den Prüfobjekten aufgenommenen Bilder benötigt bzw. verwendet.

Alternativ oder zusätzlich können bestimmte Parameter für die Beleuchtungseinrichtung und/oder die Auswerteeinrichtung und/oder den Lichtdetektor, die während der Prüfung der Prüfobjekte von der Beleuchtungseinrichtung bzw. der Auswerteeinrichtung bzw. dem Lichtdetektor verwendet werden sollen, zuvor auch auf andere Weise ermittelt werden. Die Ermittlung erfolgt dabei im Rahmen einer besonderen automatischen Einmessung eines Muster- bzw. Referenzprüfobjekts.

Hierzu ordnet ein Benutzer insbesondere an der späteren Prüfposition der Prüfobjekte ein Referenzprüfobjekt an. Zur Simulierung der späteren Prüfbedingungen stellt die Steuerung die Beleuchtungseinrichtung beispielsweise auf hinterlegte Ausgangsparameter ein, sodass ein Beleuchtungsorgan der Beleuchtungseinrichtung das Prüfobjekt beleuchtet. Beispielsweise kann die Lichtstärke des Beleuchtungsorgans auf eine hinterlegte Ausgangslichtstärke eingestellt werden. Der Lichtdetektor, in der Regel eine Kamera, nimmt anschließend mindestens ein erstes Bild des auf diese Weise beleuchteten Referenzprüfobjektes auf. Das aufgenommene Bild wird dann ausgewertet bzw. analysiert. Falls das aufgenommene Bild vorbestimmten Kriterien nicht entspricht, beispielsweise über- oder unterbelichtet ist, verändert die Steuerung die eingestellten Parameter der Beleuchtungseinrichtung. Das heißt, die Steuerung verändert beispielsweise die Lichtstärke des Beleuchtungsorgans der Beleuchtungseinrichtung. Anschließend wird mindesten ein weiteres Bild des beleuchteten Prüfobjekts aufgenommen. Auch dieses weitere Bild wird im Hinblick auf die vorbestimmten Kriterien geprüft. Die Steuerung wiederholt die vorgenannten Schritte so lange, bis eines der jeweils aufgenommenen Bilder den vorbestimmten Kriterien entspricht. Die Parameter, die zum Abschluss des Einmessvorgangs an der Beleuchtungseinrichtung eingestellt sind, nämlich dann, wenn eines der aufgenommen Bilder den vorbestimmten Kriterien entspricht, werden dann als Parameter für den späteren Prüfvorgang verwendet. Naturgemäß können im Rahmen dieses Einmessvorgangs auf diese Weise auch Parameter anderer Einrichtungen der Prüfvorrichtung bestimmt werden, beispielsweise die Empfindlichkeit des Lichtdetektors bzw. der Kamera.

Was die vorbestimmten Kriterien betrifft, die das jeweilige Bild erfüllen muss, damit die Steuerung das Einmessverfahren beendet, so kann es sich dabei beispielsweise um Helligkeitsgrenzwerte oder Helligkeitssollwerte handeln, die das Bild und/oder Teile des Bildes und/oder Pixel- bzw. Bildpunktgruppen desselben erfüllen muss.

In weiterer Ausbildung der Erfindung stellt die Steuerung dem Benutzer zunächst das Prüfobjekt auf dem Anzeigemittel bildlich dar. Dann kann der Benutzer mit der Eingabeeinrichtung mindestens einen Bereich des dargestellten Prüfobjekts auswählen, in dem das Prüfobjekt von der Prüfvorrichtung geprüft werden soll. Diesen ausgewählten Bereich hebt die Steuerung auf dem Anzeigemittel optisch hervor. Die Auswahl dieses Bereiches hat zur Folge, dass nur der ausgewählte Bereich mit der Prüfvorrichtung geprüft wird. Beispielsweise kann der Benutzer einen bestimmten Prüfbereich einer zu prüfenden Banderole eingrenzen.

Anschließend kann die Steuerung beispielsweise den Lichtdetektor der Prüfvorrichtung und/oder die Beleuchtungseinrichtung genau auf diesen Bereich einstellen. Alternativ oder zusätzlich ist denkbar, dass eine bzw. die Auswerteeinrichtung der Prüfvorrichtung, die die Auswertung von von dem Prüforgan aufgenommenen Bildern vornimmt, ausschließlich die ausgewählten Bereiche auswertet.

Zusätzlich oder alternativ ist denkbar, dass der Benutzer mit der Eingabeeinrichtung einen Bereich des Prüfobjektes aussparen kann, in dem dieses nicht geprüft werden soll. Die Auswerteeinrichtung und/oder der Lichtdetektor würden diese Bereich dann unbeachtet lassen.

Mit der vorliegenden Erfindung wird die Einrichtung der Prüfvorrichtung gegenüber den notwendigen Maßnahmen des Standes der Technik wesentlich erleichtert. Die Steuerung der Prüfvorrichtung führt den Benutzer hierzu bevorzugt interaktiv. Insbesondere durch die Anzeige von das Prüfobjekt charakterisierenden Merkmalen bzw. durch die Möglichkeit, dass ein Benutzer aus einem Satz von für das konkret zu prüfende Prüfobjekt vorgeblendeten Merkmalswerten die passenden Merkmalwerte auswählen kann, wird die Einrichtung der Prüfvorrichtung deutlich vereinfacht.

Noch weiter vereinfacht wird die Einrichtung der Prüfvorrichtung, wenn auf dem Anzeigemittel geeignete Hilfedarstellungen, etwa Hilfebilder und/oder Hilfetexte, angezeigt werden, die Hinweise zu den Merkmalswertalternativen und/oder zu den auswählbaren Bereichen umfassen. Beispielsweise kann vorgesehen sein, diese anzuzeigen bzw. einzublenden, wenn der Benutzer ein geeignetes, auf dem Anzeigemittel angezeigtes Hilfefeld mithilfe der Eingabeeinrichtung auswählt.

Die Aufgabe der Erfindung wird des Weiteren gelöst durch ein Verfahren mit den Merkmalen des Anspruchs 10.

Danach werden für die Einrichtung der Prüfvorrichtung Merkmalswerte von das Prüfobjekt insbesondere in optischer Hinsicht charakterisierenden Merkmalen von einem Benutzer - in der Regel vor Produktions- bzw. Prüfbeginn - mittels der Eingabeeinrichtung in einem Datenspeicher hinterlegt, etwa auf einer Computerfestplatte oder dergleichen.

Gegebenenfalls zusätzlich können die Merkmalswerte solcher Merkmale von der Steuerung mindestens teilautomatisch, vorzugsweise vollautomatisch durch Auswertung von mindestens einem mittels des elektrooptischen Prüforgans, insbesondere einer Kamera, aufgenommenen Bild eines Referenzprüfobjektes und/oder eines Zuschnitts und/oder Druckträgers für ein solches Referenzprüfobjekt, ermittelt werden.

Nachfolgend wird die Prüfvorrichtung von der Steuerung automatisch eingerichtet, wobei die Merkmalswerte, die von dem Benutzer hinterlegt werden und ggf. zusätzlich teil- bzw. vollautomatisch erfasst werden, diese Einrichtung beeinflussen. Später werden die Prüfobjekte mit der so eingerichteten Prüfvorrichtung geprüft.

Bei dieser Ausführungsform der Erfindung könnte demnach grundsätzlich auf eine Auswahl von Merkmalswerten aus einem Satz von zu einem Merkmal angezeigten Merkmalswertalternativen verzichtet werden. Diese Ausführungsform kann allerdings auch mit Schritten oder Teilschritten der weiter oben beschriebenen Ausführungsform der Erfindung kombiniert werden.

Was die Merkmalswerte betrifft, die hinterlegt und ggf. zusätzlich ermittelt werden, so sind dies Konstruktionsdaten des Zuschnitts für das Prüfobjekt, wie etwa Packungs- oder Rillmaße, und ggf. zusätzlich des Prüfobjekts. Es können auch Daten, insbesondere Abmessungen und/oder Positionsangaben, zu an dem Prüfobjekt und/oder an dem Zuschnitt angeordneten Bildobjekten oder alphanummerischer Zeichen sein.

Die Steuerung ermittelt anschließend aus den von dem Benutzer eingegebenen Konstruktionsdaten des Zuschnitts für das Referenzprüfobjekt ggf. zusätzlich den Daten zu den Bildobjekte/alphanumerischen Zeichen und gegebenenfalls aus weiteren charakteristischen Merkmalen bzw. Daten mit Hilfe geeigneter Algorithmen ein insbesondere räumlich wirkendes Bild - 3D-Bild - eines aus dem Zuschnitt faltbaren Referenzprüfobjekts.

Die Steuerung bzw. die Auswerteeinrichtung der Prüfvorrichtung verwendet das ermittelte Bild des aus dem Zuschnitt faltbaren Referenzprüfobjekts bei der nachfolgenden Prüfung der Prüfobjekte als Referenzbild, das mindestens bereichsweise jeweils verglichen wird mit mindestens einem von der Prüfvorrichtung während der Prüfung der Prüfobjekte aufgenommenen Bild oder Teilbild des jeweiligen zu prüfenden Prüfobjektes.

In die Ermittlung des Referenzbildes fließen Korrekturparameter ein, insbesondere Korrekturparameter, mit denen Einflüsse der Prüfvorrichtung auf das Abbild des während des Prüfvorgangs erfassten Prüfobjekts einbezogen werden. Hierbei kann es sich insbesondere um Einflüsse der Optik des elektrooptischen Prüforgans der Prüfvorrichtung handeln und/oder um Einflüsse der Elektronik des elektrooptischen Prüforgans.

Alternativ oder zusätzlich werden in die Ermittlung des Referenzbildes vorhersehbare, systematische Abweichungen der hergestellten, realen Prüfobjekte von einem idealen Prüfobjekt einbezogen. Beispielsweise weicht eine tatsächlich aus einem Zuschnitt gefaltete Zigarettenpackung in der Regel von einer aus den Konstruktionsmaßen eines vorgegebenen Zuschnitts theoretisch berechneten, "virtuellen" Zigarettenpackung ab. So ergeben sich beispielsweise im Rahmen der tatsächlichen Faltvorgänge Rundungen an den Faltlinien, die zu einer Abweichung der realen Zigarettenpackung von der theoretisch berechneten Packung führen. Solche systematischen Abweichungen können in die theoretische Ermittlung des Referenzbildes des Referenzprüfobjektes einfließen.

In weiterer Ausbildung der Erfindung werden auf dem Referenzprüfobjekt oder auf dem Zuschnitt für das Referenzprüfobjekt angeordnete Bildobjekte und/oder alphanummerische Zeichen bei der automatischen oder teilautomatischen Ermittlung der Merkmalswerte der charakteristischen Merkmale erkannt.

In weiterer Ausbildung der Erfindung können ein oder mehrere von auf dem Zuschnitt für das Referenzprüfobjekt angeordneten Bildobjekten und/oder alphanummerischen Zeichen bei dem im Rahmen der nachfolgenden Prüfung der Prüfobjekte erfolgenden Vergleich der Prüfobjekte mit dem Referenzprüfobjekt außer Betracht bleiben bzw. unbeachtet bleiben.

Bevorzugt werden die Bereiche bzw. die Bildobjekte/alphanummerischen Zeichen, die bei der nachfolgenden Prüfung der Prüfobjekte nicht beachtet werden sollen, von dem Benutzer mittels der Eingabeeinrichtung manuell als außer Betracht bleibend ausgewählt werden. Denkbar ist aber auch eine entsprechende automatische oder teilautomatische Auswahl solcher Bereiche bzw. solcher Bildobjekte/alphanummerischer Zeichen.

Alternativ oder zusätzlich können in die Ermittlung des Referenzbildes vorhersehbare, systematische Abweichungen der hergestellten, realen Prüfobjekte von einem idealen Prüfobjekt einbezogen werden. Beispielsweise weicht eine tatsächlich aus einem Zuschnitt gefaltete Zigarettenpackung in der Regel von einer aus den Konstruktionsmaßen eines vorgegebenen Zuschnitts theoretisch berechneten, "virtuellen" Zigarettenpackung ab. So ergeben sich beispielsweise im Rahmen der tatsächlichen Faltvorgänge Rundungen an den Faltlinien, die zu einer Abweichung der realen Zigarettenpackung von der theoretisch berechneten Packung führen. Solche systematischen Abweichungen können in die theoretische Ermittlung des Referenzbildes des Referenzprüfobjektes einfließen.

In weiterer Ausbildung der Erfindung werden auf dem Referenzprüfobjekt oder auf dem Zuschnitt für das Referenzprüfobjekt angeordnete Bildobjekte und/oder alphanummerische Zeichen bei der automatischen oder teilautomatischen Ermittlung der Merkmalswerte der charakteristischen Merkmale erkannt.

In weiterer Ausbildung der Erfindung können ein oder mehrere von auf dem Zuschnitt für das Referenzprüfobjekt angeordneten Bildobjekten und/oder alphanummerischen Zeichen bei dem im Rahmen der nachfolgenden Prüfung der Prüfobjekte erfolgenden Vergleich der Prüfobjekte mit dem Referenzprüfobjekt außer Betracht bleiben bzw. unbeachtet bleiben.

Bevorzugt werden die Bereiche bzw. die Bildobjekte/alphanummerischen Zeichen, die bei der nachfolgenden Prüfung der Prüfobjekte nicht beachtet werden sollen, von dem Benutzer mittels der Eingabeeinrichtung manuell als außer Betracht bleibend ausgewählt werden. Denkbar ist aber auch eine entsprechende automatische oder teilautomatische Auswahl solcher Bereiche bzw. solcher Bildobjekte/alphanummerischer Zeichen.

Weitere Merkmale der vorliegenden Erfindung ergeben sich aus den beigefügten Unteransprüchen, der nachfolgenden Beschreibung bevorzugter Ausführungsbeispiele der Erfindung sowie den beigefügten Zeichnungen. Darin zeigt:
- Fig. 1: eine schematische Darstellung eines Teils einer Verpackungsmaschine für Weichbecherpackungen,
- Fig. 2: eine schematische Teildarstellung des Ablaufs der Einrichtung einer Prüfvorrichtung der Verpackungsmaschine,
- Fig. 3: eine weitere schematische Teildarstellung des Ablaufs der Einrichtung der Prüfvorrichtung der Verpackungsmaschine,
- Fig. 4: eine schematische Darstellung einer alternativen Vorgehensweise zur Einrichtung der Prüfvorrichtung,
- Fig. 5: eine schematische Darstellung der optischen Prüfung einer Hinge-Lid-Zigarettenpackung,
- Fig. 6: einen Zuschnitt für eine Referenzzigarettenpackung, der im Rahmen der alternativen Vorgehensweise gemäß Fig. 4 verwendet wird.

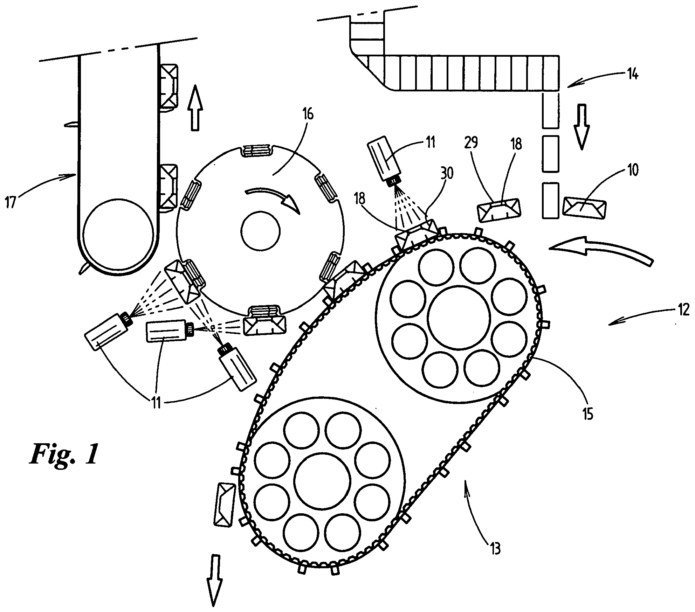

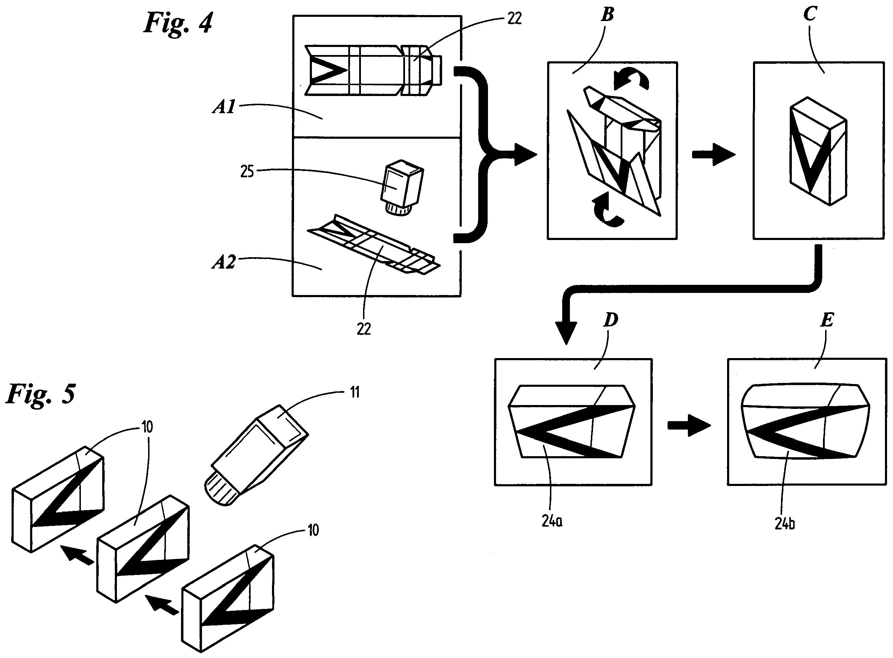

Fig. 1 zeigt beispielhaft Teile einer Vorrichtung zum Herstellen von Zigarettenpackungen 10, nämlich einer Verpackungsmaschine. Die Vorrichtung kann Zigarettenpackungen 10 des Typs Weichbecher bzw. Weichpackungen herstellen. Auf die Art der herstellbaren Zigarettenpackungen kommt es erfindungsgemäß allerdings nicht an. Die Erfindung kann beispielsweise auch im Zusammenhang mit Vorrichtungen zur Herstellung von Packungen 10 des Typs Hinge-Lid eingesetzt werden, aber auch im Zusammenhang mit Kartonpackern, Folienpackern oder dergleichen. Die Prüfung von Hinge-Lid Packungen ist in Fig. 4 gezeigt.

Die schematische Darstellung zeigt einen Ausschnitt der Verpackungsmaschine, in dem die Packungen 10 bzw. Einzelheiten derselben mittels einer Prüfvorrichtung optisch geprüft werden. Die Prüfvorrichtung verfügt unter anderem über elektrooptische Prüforgane 11, im vorliegenden Fall CCD-Kameras.

Die Prüforgane 11 erfassen vorliegend sämtliche Seiten der Zigarettenpackungen 10, auch wenn die Erfassung der Oberseiten 29 und der Bodenseiten 30 der Packungen nicht explizit dargestellt ist. In dem in Fig. 1 dargestellten Bereich der Verpackungsmaschine sind die einzelnen Packungen 10 bereits weitgehend fertiggestellt und werden auf einem Trockenrevolver 12 während eines längeren Zeitraums in der dargestellten Drehrichtung transportiert, damit Leimstellen der Packungen 10 abbinden können und das exakte Format der Packungen 10 dabei stabilisiert wird. Die Packungen 10 verlassen den Trockenrevolver 12 über eine Ausschleuseeinrichtung 13, die im vorliegenden Fall als Gurtförderer ausgebildet ist.

Einzelheiten zum Aufbau und zur Funktionsweise des Trockenrevolvers 12 und der Ausschleuseeinrichtung 13 können der EP 0 605 838 entnommen werden, auf die zum Zwecke der vollständigen Offenbarung Bezug genommen wird und deren Inhalt vollumfänglich zum Gegenstand der vorliegenden Anmeldung gemacht wird. Des Weiteren ist dieser Schrift auch die Zuführung von Banderolen 14 und deren Anbringung an den Packungen 10 zu entnehmen.

Die Packungen 10 werden vom Umfang eines Fördertrums 15 der Ausschleuseeinrichtung 13 durch eine Übergabeeinrichtung, im vorliegenden Fall ein drehend angetriebenes Ausschleuserad 16, abgenommen und direkt an einen aufrecht gerichteten Zigarettenförderer 17 übergeben. Das Ausschleuserad 16 ist in Einzelheiten in der EP 0 770 551 beschrieben, der Zigarettenförderer 17 in der EP 0 596 387. Auch auf diese Anmeldungen wird zum Zwecke der vollständigen Offenbarung Bezug genommen. Der Inhalt dieser Anmeldung wird zum Gegenstand der vorliegenden Anmeldung gemacht.

Wie teilweise zu erkennen ist, ist zur Prüfung der Packungen 10 jeweils eine Packungsseite der Packung 10 jeweils einem Prüforgan 11 zugeordnet. Die von dem jeweiligen Prüforgan 11 der Prüfvorrichtung aufgenommenen Bilder werden in einer nicht dargestellten Auswerteeinrichtung der Prüfvorrichtung analysiert. Die Analyse dient in der Regel vornehmlich der Erkennung von Fehlern der jeweils produzierten Packung. Fehlerhafte Packungen können dann in der Folge aus dem Produktionsprozess ausgeschleust werden.

Die Auswerteeinrichtung kann beispielsweise Teil der ebenfalls nicht dargestellten Steuerung bzw. Steuereinrichtung der Prüfvorrichtung sein, mit der unter anderem die einzelnen Prüforgane 11 gesteuert werden können. Die Auswerteeinrichtung kann natürlich auch eine separate Einheit sein, beispielsweise eine übliche Computereinrichtung mit entsprechender Bildauswerte- bzw. -analysesoftware zur Auswertung von mit den Prüforganen 11 aufgenommenen Bildern der Packungen 10 bzw. der jeweiligen Packungsseiten.

Die Prüfvorrichtung ist auf die zu untersuchende Packungsart bzw. den Packungstyp abgestimmt. Je nach Packungstyp bzw. je nach produzierter Zigarettenmarke unterscheiden sich die Packungen 10. So können die Packungen 10 unterschiedliche Banderolen 14 aufweisen, unterschiedliche Aufdrucke und dergleichen mehr. Unterschiedliche Materialien, Farben, Aufdrucke, Kontraste etc. erfordern in der Regel unterschiedliche Einstellungen der Prüfvorrichtung.

Eine wichtige Besonderheit ist, dass ein Benutzer bei der Abstimmung der Prüfvorrichtung auf die jeweils produzierte Marke bzw. den jeweils produzierten Packungstyp, also bei der Einrichtung der Prüfvorrichtung, durch die Steuerung der Prüfvorrichtung unterstützt wird.

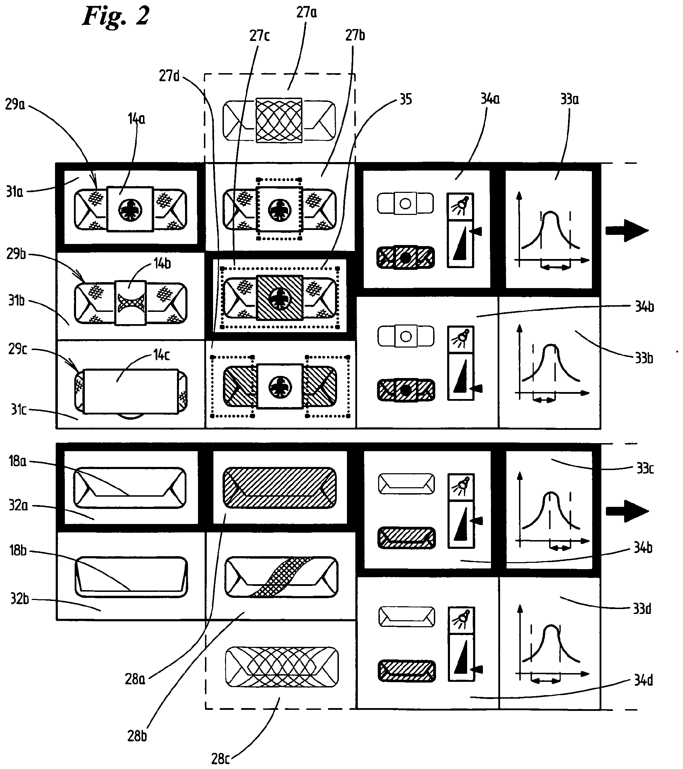

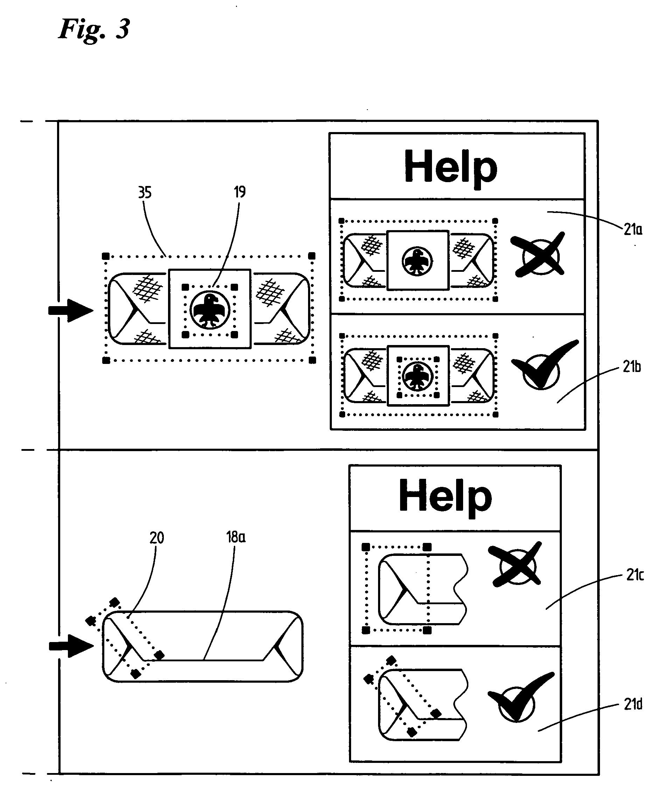

Dies wird nachfolgend anhand der Fig. 2, 3 beispielhaft im Hinblick auf die Prüfung der Packungsoberseiten 29 sowie der Bodenseiten 30 der Packungen 10 erläutert. Konkret wird in der nachstehend beschriebenen Weise die Prüfvorrichtung, insbesondere die Auswerteeinrichtung der Prüfvorrichtung, ausgehend von einer von einem Benutzer vorzunehmenden Auswahl von Merkmalswerten zu bestimmten Merkmalen der Packung 10 durch die Steuerung automatisch eingerichtet. Natürlich können auch andere Aggregate der Prüfvorrichtung auf diese Weise abhängig von Auswahlentscheidungen des Benutzers automatisch durch die Steuerung eingestellt werden.

Wenn die Prüfvorrichtung auf die Prüfung einer neu herzustellenden Packung 10 abgestimmt werden soll, werden dem Benutzer zunächst von der Steuerung auf einem Anzeigemittel bzw. einem Bildschirm Merkmale bzw. Merkmalswerte von Zigarettenpackungen angezeigt, die die Zigarettenpackungen optisch charakterisieren und für die Einrichtung bzw. Einstellung der Prüfvorrichtung wichtig sind. Dabei wird auf dem Anzeigemittel zu jedem Merkmal ein Satz von Merkmalswertalternativen angezeigt, aus dem der Benutzer denjenigen Merkmalswert auswählen kann, der dem entsprechenden Merkmalswert der neu herzustellenden und mit der Prüfvorrichtung bei der späteren Prüfung zu prüfenden Packung 10 entspricht.

Beispielsweise sind in Fig. 2 graphisch drei Oberseiten 29a-c von Zigarettenpackungen dargestellt, auf denen jeweils unterschiedliche Banderolenarten 14a, 14b, 14c aufliegen. Mittels einer Eingabeeinrichtung, beispielsweise eines Zeigegerätes, wie etwa einer Maus, kann der Benutzer dann diejenige Kombination 31a-c aus Oberseite 29a-c und Banderolenart 14a-14c auswählen, die derjenigen Kombination aus Oberseite 29 und Banderolenart 14 entspricht, die gemäß Fig. 1 die neu herzustellende Packung 10 aufweist. Die drei verschiedenen Kombinationen 31a-c aus Oberseiten 29a-c mit Banderolenarten 14a-14c bilden demnach Merkmalswertalternativen eines Merkmals "Oberseite/Banderole".

Um die Darstellung der Merkmalswertalternativen sowie die Auswahl durch den Benutzer zu vereinfachen, kann das Anzeigemittel Teil eines Touchscreens sein, der gleichzeitig als Eingabeeinrichtung dient.

Weiter sind in Fig. 2 Kombinationen 32a-b von zwei Bodenseiten 30a-b von Zigarettenpackungen gezeigt, wobei jede Bodenseite 30a-b eine andere Bodenfaltung 18a bzw. 18b aufweist. Der Benutzer kann auswählen, welche der beiden Kombinationen 32a-b von Bodenseite 30a-b mit Bodenfaltung 18a, 18b der in Fig. 1 gezeigten Bodenseite 30 der neu herzustellenden Zigarettenpackungen 10 entspricht. Die beiden verschiedenen Kombinationen 32a-b aus Bodenseiten 30a-b mit Bodenfaltung 18a, 18b bilden demnach Merkmalswertalternativen eines Merkmals "Bodenseite/Bodenfaltung".

Neben diesen Beispielen kann es noch eine Vielzahl von weiteren charakterisierenden Merkmalen geben, zu denen die Steuerung dem Benutzer Merkmalswertalternativen zur Auswahl vorschlägt.

Es liegt auch im Rahmen der Erfindung, dass keine der Merkmalswerte 31a-c, 32a-b exakt dem entsprechenden Merkmalswert der neu herzustellenden Packungen 10 entspricht. In so einem Fall kann der Benutzer beispielsweise denjenigen Merkmalswert auswählen, der dem der herzustellenden Packung 10 am nächsten kommt.

Die Auswahl der Merkmalswerte 31a-c, 32a-b durch den Benutzer für die jeweils die Packungen 10 charakterisierenden Merkmale beeinflusst die spätere Einrichtung der Prüfvorrichtung durch die Steuerung. So wählt die Steuerung zunächst abhängig von der getroffenen Auswahl der Merkmalswerte aus einer vorgegebenen Anzahl von Prüfmethoden diejenigen Prüfmethoden aus, die bei diesen Merkmalswerten verwendbar sind.

In dem Beispiel der Fig. 2 sind von dem Benutzer die Kombination 31a aus Oberseite 29a und Banderole 14a sowie die Kombination 32a aus Bodenseite 30a und Bodenfaltung 18a ausgewählt worden. In einem Datenspeicher sind den einzelnen Merkmalswerten 31a-c jeweils Prüfmethoden 27a-d zugeordnet, den Merkmalswerten 32a-b jeweils Prüfmethoden 28a-c.

Die Steuerung wählt aufgrund der von dem Benutzer ausgewählten Kombination 31a aus Oberseite 29a und Banderole 14a aus den in dem Datenspeicher hinterlegten Prüfmethoden 27a-d, die grundsätzlich für verschiedene Kombinationen aus Oberseiten/Banderolen denkbar wären, die der ausgewählten Kombination 31a zugeordnete Prüfmethode 27c aus.

Die Steuerung wählt des Weiteren aufgrund der von dem Benutzer ebenfalls ausgewählten Kombination 32a aus Bodenseite 30a und Bodenfaltung 18a aus den in dem Datenspeicher hinterlegten Prüfmethoden 28a-c, die grundsätzlich für verschiedene Kombinationen aus Bodenseiten/Bodenfaltungen denkbar wären, die der ausgewählten Kombination 32a zugeordnete Prüfmethode 28a aus. Hinter den Prüfmethoden 27a-d bzw. 28a-c stehen unter anderem verschiedene Bildauswerteverfahren bzw. Prüfalgorithmen mit denen die während der Prüfung der Packungen 10 aufgenommenen Bilder von der Auswerteeinrichtung der Prüfvorrichtung ausgewertet werden können.

Die Prüfmethode 27c kann beispielsweise einen Prüfalgorithmus umfassen, mit dem im Rahmen des späteren Prüfprozesses mithilfe eines geeigneten Bildauswerteverfahrens die korrekte Positionierung und/oder Ausbildung der Banderole 14 auf der Oberseite 29 der Zigarettenpackung 10 geprüft wird. Die Prüfmethode 28a dagegen könnte einen Prüfalgorithmus umfassen, der die korrekte Positionierung und/oder Ausbildung der Faltung 18 auf der Bodenseite 30 mithilfe eines anderen geeigneten Bildauswerteverfahrens prüft.

Die Auswahl der Prüfmethode 27c bzw. der Prüfmethode 28a durch die Steuerung kann zudem beispielsweise jeweils einen der Prüfmethode 27c bzw. der Prüfmethode 28a zugeordneten Filteralgorithmus (z.B. Sobel-Filter, Gray Morph-Filter) bedingen. Der jeweilige Filteralgorithmus würde entsprechend von der Auswerteeinrichtung bei der elektronischen Bilderkennung bzw. Bildauswertung der im Rahmen der späteren Prüfung der Zigarettenpackungen 10 aufgenommen Bilder der Packungsoberseiten 29 bzw. der Packungsbodenseiten 30 verwendet werden.

Die Prüfmethoden 27c bzw. 28a sind dabei zur Erzielung optimaler Auswerteergebnisse angepasst an die jeweils zu prüfenden Prüfobjekte, im vorliegenden Fall der Prüfobjekte aus Oberseite 29 und Banderole 14 bzw. aus Bodenseite 30 und Faltung 18.

Bei der zu prüfenden Banderole 14 der Zigarettenpackung 10 handelt es sich beispielsweise um eine Banderolenart, die auf einem dunklen Zuschnitt bzw. Hintergrund ein Muster aufweist. Die zu prüfende Oberseite 29 der Packung 10 besteht aus einer dunklen Silberfolie mit hohen Reflexionseigenschaften.

Eine andere Konstellation und somit eine andere Auswahl aus den Merkmalswerten 31a-d durch den Benutzer, in der beispielsweise eine helle Banderole auf einer dunklen, nicht reflektierenden Oberseite angeordnet wäre, könnte beispielsweise anstelle der Verwendung der Prüfmethode 27c die Verwendung der Prüfmethode 27d mit einem anderen zugeordneten Filter erforderlich machen, um optimale Auswerteergebnisse erzielen zu können.

Weiter ist vorgesehen, dass der Benutzer mithilfe der Eingabeeinrichtung gezielt bestimmte, im Rahmen der automatischen Auswertung nur schwierig zu erfassende Bereiche der Packungen 10 aussparen kann, die mit der Prüfvorrichtung nicht geprüft werden sollen. Mit anderen Worten würde vorliegend beispielsweise nicht jeweils die gesamte Packungsseite 29, 30 der Packung 10 geprüft werden, sondern nur ein Ausschnitt derselben.

In dem Beispiel der Fig. 2, 3 hat der Benutzer das Muster der Banderole 14a ausgespart. Der ausgesparte Bereich ist auf dem Anzeigemittel optisch hervorgehoben, im vorliegenden Fall durch eine gepunktete Linie 19. Der ausgesparte Bereich wird von der Auswerteeinrichtung bei der Bildauswertung im Rahmen der späteren Prüfung der Zigarettenpackungen 10 nicht beachtet.

In ähnlicher Weise kann der Benutzer bestimmte Bereiche näher festlegen, in denen die Prüfobjekte geprüft werden sollen. Beispielsweise bei der ausgewählten Bodenfaltung 18a der Kombination 32a kann der Benutzer den Bereich der Faltung 18a auswählen, der speziell geprüft werden soll. Der ausgewählte Bereich wird auf dem Anzeigemittel ebenfalls optisch hervorgehoben, in diesem Fall durch eine gepunktete Linie 20. Die Auswerteeinrichtung würde bei der Bildauswertung im Rahmen der späteren Prüfung der Zigarettenpackungen 10 nur diesen Bereich beachten bzw. auswerten.

Zudem kann vorgesehen sein, dass dem Benutzer Hilfedarstellungen angezeigt werden, die Hinweise zu Merkmalswertalternativen und/oder zu auswählbaren Bereichen umfassen. Im vorliegenden Beispiel werden entweder automatisch oder auf Anforderung durch den Benutzer, beispielsweise indem er mit einem Zeigegerät auf ein Hilfefeld klickt, zu dem aussparbaren Bereich der Banderole 14a zwei Hilfehinweise 21a und 21b angezeigt. Dabei dient Hinweis 21a dazu, den Benutzer darauf hinzuweisen, dass ein Verzicht auf eine Aussparung des Musters der Banderole 14a nicht sinnvoll wäre. Der Hinweis 21b zeigt an, dass das Muster richtigerweise ausgespart werden soll.

In ähnlicher Weise werden dem Benutzer zu den auswählbaren Bereichen der Bodenfaltung 18a Hilfedarstellungen 21c, 21d angezeigt.

Gemäß einem weiteren wichtigen Aspekt der Erfindung, der durch die Kästchen 34a-d in Fig. 2 veranschaulicht ist, werden Parameter von Beleuchtungseinrichtungen 26, die die zu prüfenden Packungen während des späteren Prüfvorgangs beleuchten, um bei den von den Prüforganen bzw. Kameras 11 aufgenommenen Bildern der Packungsseiten einen möglichst großen Kontrast zwischen verschiedenen Bildbestandteilen zu erzielen, im Rahmen eines separaten Einmessvorgangs einer Muster- bzw. Probepackung automatisch ermittelt.

Hierzu ordnet der Benutzer an der späteren Prüfposition der Zigarettenpackungen 10, also an den Prüfpositionen aus Fig. 1, jeweils Referenz- bzw. Musterpackungen an. Zur Simulierung der späteren Prüfbedingungen stellt dann die Steuerung der Prüfvorrichtung die in Fig. 1 nicht gezeigten Beleuchtungseinrichtungen 26 auf hinterlegte Ausgangsparameter ein, sodass die Beleuchtungsorgane der Beleuchtungseinrichtungen 26 die entsprechenden Packungsseiten der Zigarettenpackungen, beispielsweise die in Fig. 2 gezeigte Oberseite 29a mit Banderole 14a und die Bodenseite 32a mit Bodenfaltung 28a, beleuchtet.

Dabei kann die Lichtstärke des jeweiligen Beleuchtungsorgans der jeweiligen Beleuchtungseinrichtung 26 zunächst jeweils auf eine hinterlegte Ausgangslichtstärke eingestellt werden. Die jeweilige Kamera 11 nimmt anschließend mindestens ein Bild der jeweiligen, auf diese Weise beleuchteten Packungsseite auf. Das aufgenommene Bild wird dann von der Auswerteeinrichtung ausgewertet bzw. analysiert.

Falls das aufgenommene Bild vorbestimmten Kriterien nicht entspricht, verändert die Steuerung die eingestellten Parameter der jeweiligen Beleuchtungseinrichtung 26, nämlich im vorliegenden Fall die Lichtstärke, bis die vorgenannten Kriterien erfüllt sind.

Im Beispiel der Fig. 2 wird durch das Kästchen 34a sowie das zugeordnete Kästchen 33a symbolisiert, dass zur Erzielung optimaler Ergebnisse bei der Einmessung der Oberseite 29a mit Banderole 14a in dem aufgenommen Bild im Rahmen der Bildauswertung ein großer Anteil von überbelichteten Bildpunkten an der Gesamtanzahl der Bildpunkte des aufgenommenen Bildes akzeptiert wird. Weiter wird im Rahmen des Einmessvorgangs in dieser Konstellation zur Erzielung eines optimalen Ergebnisses die gesamte Oberseite 29a mit Banderole 14a vermessen, vgl. gepunktete Linie 35.

Hintergrund der Einmessung des gesamten Bereichs 35 ist, dass bei der ausgewählten Kombination 31a aus Silberfolienoberseite 29a und dunkler Banderole 14a die Störreflexionen der Silberfolienoberseite groß sind. Hintergrund der Akzeptanz eines hohen Anteils von überbelichteten Bildpunkten ist, dass die Lichtstärke möglichst hoch sein muss, um bei dieser Konstellation eines geringen intrinsischen Kontrastes zwischen dunkler Banderole 14a und dunkler Oberseite 29a in der Bildauswertung beispielsweise Kantenübergänge zwischen der annähernd ähnlich dunklen Banderole 14a und der Oberseite 29a zu erkennen.

Die Steuerung verändert die Lichtstärke des jeweiligen Beleuchtungsorgans der jeweiligen Beleuchtungseinrichtung 26 im Rahmen der Einmessung dann so lange, bis ein bestimmter Anteil von Bildpunkten des aufgenommen Bildes einen vorbestimmten Helligkeitswert aufweist.

Bei einer anderen Konstellation, symbolisiert durch Kästchen 34b, bei der zwischen Banderole und Oberseite ein hoher intrinsischer Kontrast gegeben ist, beispielsweise bei einer hellen Banderole auf einer dunklen Oberseite, würde im Rahmen des Einmessvorgangs die Beleuchtungsstärke so lange geändert werden, bis ein entsprechend geringerer Anteil von Bildpunkten in dem aufgenommen Bild einen bestimmten, gegenüber der Konstellation 34a geringeren Helligkeitswert aufweist. Mit anderen Worten werden in der Konstellation gemäß Kästchen 34a in dem aufgenommenen Bild weniger überbelichtete Bildpunkte akzeptiert als dies in der Konstellation gemäß Kästchen 34b der Fall wäre. Zudem wäre es in der Konstellation gemäß Kästchen 34b denkbar, auf die Einmessung der gesamten Oberseite zu verzichten und im Wesentlichen nur die Banderole einzumessen.

Die tatsächliche Lichtstärke und ggf. andere Parameter der Beleuchtungseinrichtung 26, die zum Abschluss des Einmessvorgangs eingestellt sind, also dann, wenn die vorbestimmten Kriterien, die das jeweils aufgenommene Bild erfüllen muss, vorliegen, werden dann als Einstellparameter der Beleuchtungseinrichtung 26 für den späteren Prüfvorgang der Oberseiten der Packungen 10 verwendet. Naturgemäß könnten im Rahmen dieses Einmessvorgangs auf diese Weise auch Parameter anderer Einrichtungen der Prüfvorrichtung ermittelt werden, beispielsweise die Empfindlichkeit der jeweiligen Kamera 11.

In ähnlicher Weise werden die Beleuchtungsparameter für die Beleuchtung der Bodenseite 30a mit Bodenfaltung 18a im Rahmen eines weiteren Einmessvorgangs ermittelt, und zwar letztlich abhängig von den intrinsischen Kontrasten zwischen Bodenseite 30a und Bodenfaltung 18a (Kästchen 34c, d).

Die Fig. 4-6 zeigen eine weitere Ausführungsform der Erfindung. Es geht um die Herstellung und Prüfung von Packungen 10 des Typs Hinge-Lid. Diese werden aus Zuschnitten gefaltet bzw. hergestellt.

Anders als bei der vorstehend beschriebenen Ausführungsform der Fig. 1, 2 werden dem Benutzer bei der Einrichtung der Prüfvorrichtung zu der neu zu produzierenden Packung 10 keine Listen von Merkmalswerten von die Packung charakterisierenden Merkmalen angezeigt. Der Ablauf ist vielmehr wie folgt:

Gemäß einer ersten Alternative der weiteren Ausführungsform kann ein Benutzer mittels der Eingabeeinrichtung Merkmalswerte der Packung 10 in einem der Steuerung der Prüfvorrichtung zugeordneten Datenspeicher hinterlegen (Schritt A1 in Fig. 3). Bei dem Datenspeicher handelt es sich vorliegend beispielsweise um eine Festplatte. Auch sämtliche anderen bekannten Datenspeicher sind naturgemäß verwendbar. Auf dem Datenspeicher kann sich eine Datenbanksoftware befinden, in die die Merkmalswerte geschrieben werden.

Als Merkmalswerte können beispielsweise Konstruktionsdaten eines Muster- bzw. Referenzzuschnitts 22 für die Packungen 10 hinterlegt werden. Die Konstruktionsdaten können Abmessungen des Zuschnitts 22 beschreiben, die Lage und Länge der einzelnen Faltlinien des Zuschnitts 22, die Größe und/oder die Formen der einzelnen Faltlappen und dergleichen mehr. Diese Konstruktionsdaten kann der Benutzer von dem Referenz- bzw. Musterzuschnitt 22 ableiten.

Neben den Konstruktionsdaten kann der Benutzer noch weitere Daten hinterlegen, insbesondere Daten zu auf dem Zuschnitt 22 bzw. der späteren Packung 10 angeordneten Bildobjekten 23a, 23b, 23c, 23d, 23e. Diese Daten zu den Bildobjekten 23a-e umfassen insbesondere Art, Form, Farbe, Position und/oder Größe der Bildobjekte und dergleichen mehr.

Dabei ist denkbar, dass der Benutzer mit der Eingabeeinrichtung zunächst aus einer Auswahl von verschiedenen, bereits in dem Datenspeicher hinterlegten Bildobjekten die mit dem Musterzuschnitt 22 übereinstimmenden Bildobjekte 23a-e auswählt. Es können alternativ auch speziell nur die Bildobjekte 23a-e als Dateien hinterlegt sein bzw. unmittelbar für den Einrichtvorgang der Prüfvorrichtung auf die neu zu produzierende Packung 10 hinterlegt werden, sodass die Auswahl der richtigen Bildobjekte 23a-e aus einer vorgeschlagenen Menge von Bildobjekten entfällt.

Die Bildobjekte 23a-e können dabei in dem Datenspeicher hinterlegt werden, indem beispielsweise der Musterzuschnitt eingescannt wird bzw. diejenigen Bereiche desselben, die die einzelnen Bildobjekte aufweisen. Aus den eingescannten Bilddaten können dann jeweils einzelne Bilddateien der Bildobjekte erzeugt werden.

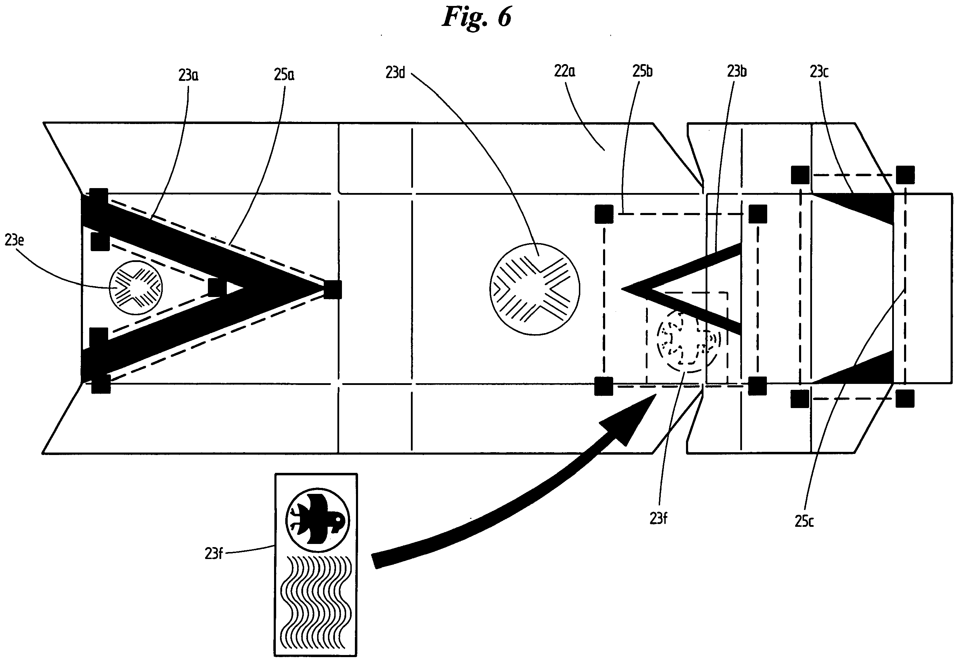

Die hinterlegten Bildobjekte 23a-e kann der Benutzer dann auf einem aus den zuvor hinterlegten Konstruktionsdaten zu der Packung 10 bzw. des Musterzuschnitts 22 errechneten, auf dem Bildschirm angezeigten (virtuellen) Abbild 22a (Fig. 6) des Zuschnitts 22 so positionieren, wie sie auf dem (realen) Musterzuschnitt 22 angeordnet sind. Alternativ ist natürlich auch eine Positionierung der Bildobjekte 23a-e auf dem Abbild 22a des Musterzuschnitts 22 möglich anhand von Positionsangaben, die der Benutzer mit der Eingabeeinrichtung hinterlegt.

Weiter kann auch ein Abbild 23f einer auf der Packung 10 zu platzierenden Banderole separat als Bilddatei hinterlegt und auf dem virtuellen Zuschnitt 22a positioniert werden.

Im Ergebnis werden sämtliche Informationen bzw. Daten, einschließlich der Bildobjekte, zu dem realen Musterzuschnitt 22 bzw. zu der zu produzierenden Packung 10 in dem Datenspeicher hinterlegt, die notwendig sind, um hieraus, insbesondere mittels geeigneter Software, das Bild 22a der aus dem Zuschnitt 22 faltbaren Packung 10 errechnen zu können.

Gemäß einer zweiten Alternative der weiteren Ausführungsform, nämlich alternativ zu dem manuellen Hinterlegen der oben beschriebenen Konstruktionsdaten sowie der Daten weiterer charakterisierender Merkmale des Zuschnitts 22 durch einen Benutzer, ist vorgesehen, diese Daten automatisch oder mindestens teilautomatisch durch die Steuerung erfassen zu lassen.

Hierfür wird zunächst ein tatsächlicher Referenzzuschnitt 22 der zu produzierenden Packungen 10 mit einem geeigneten Erfassungsorgan 25, in der Regel einer Kamera, erfasst. Mit anderen Worten wird das Abbild 22a des tatsächlichen Referenz- bzw. Musterzuschnitts 22 automatisch erzeugt (Schritt A2 in Fig. 3) und automatisch in dem Datenspeicher der Steuervorrichtung hinterlegt.

In einer quasi vollautomatischen Variante werden aus dem Abbild 22a mithilfe einer Auswerteeinrichtung (beispielsweise einer Computereinrichtung), die in der Regel Teil der Steuerung ist, dann sämtliche Konstruktionsdaten sowie sämtliche weiteren Daten (Bildobjektdaten etc.), die in der ersten Variante händisch durch den Benutzer eingegeben wurden, durch geeignete Analyse aus dem durch die Kamera erfassten Abbild 22a ermittelt bzw. hieraus extrahiert. Die für eine solche Analyse des Abbildes des Musterzuschnitts 22 notwendige Software der Auswerteeinrichtung kann von dem Fachmann des Standes der Technik ohne Weiteres bereitgestellt werden.

Dabei ist es denkbar, dass der Benutzer einzelne Bereiche 25a, 25c des Abbildes 22a des Zuschnitts 22 auswählt, um die Erkennung der einzelnen auf dem Abbild 22a angeordneten Bildobjekte im Rahmen der oben beschriebenen Analyse des Abbildes 22a, in diesem Fall der Bildobjekte 23a, 23b, 23c, zu vereinfachen.

Weiter ist es denkbar, separate Druckträger, die auf der Zigarettenpackung 10 angeordnet werden sollen, wie etwa die Banderole 23f, ebenfalls mit dem Erfassungsorgan 25 zu erfassen, ein Abbild derselben zu hinterlegen, ggf. notwendige Daten abzuleiten und gegebenenfalls das Abbild des Zuschnitts ebenfalls automatisch an einer bestimmten Position des Abbildes 22a des Zuschnitts 22 anzuordnen.

Die Anordnung des Abbildes 23f an dem virtuellen Abbild 22a des Zuschnitts 22 kann alternativ auch manuell von einem Benutzer durchgeführt werden.

Sobald sämtliche Konstruktionsdaten, Grafiken, gegebenenfalls alphanumerische Zeichen etc. des Zuschnitts 22 hinterlegt (Alternative 1) sind, oder sämtliche Daten automatisch aus dem mittels der Kamera 25 erfassten Abbild 22a des erfassten Zuschnitt 22 abgeleitet wurden (Alternative 2), errechnet die Auswerteeinrichtung ein Bild 24a der sich aus diesen Daten ergebenen, virtuellen Zigarettenpackung 10 (Schritte B, C, D in Fig. 3). Dabei wird bevorzugt ein dreidimensionales (virtuelles) Abbild der Zigarettenpackung 10 erzeugt. Mit anderen Worten wird ein Bild 24a der Packung 10 erzeugt, die aus dem Zuschnitt 22 faltbar ist.

Aus dem dreidimensionalen Abbild 24a wird anschließend in nachfolgend noch näher beschriebener Weise ein Referenzbild 24b erzeugt (Schritt E). Dieses Referenzbild 24b dient bei der Prüfung der tatsächlich hergestellten Zigarettenpackungen 10 im späteren Produktionsprozess als Vergleichsbild. Das Referenzbild 24b oder gegebenenfalls Teile desselben werden dabei mit von der Prüfvorrichtung bzw. den Prüforganen 11 aufgenommenen Bildern der tatsächlich produzierten Zigarettenpackungen 10 verglichen. Abweichungen der aufgenommenen Bilder von dem Referenzbild 24b können dann erfasst und in an sich bekannter Weise können Fehler der produzierten Zigarettenpackungen 10 entdeckt werden.

In die Ermittlung des Referenzbildes 24b fließen zum einen Korrekturparameter ein, die beispielsweise Einflüsse der Prüfvorrichtung auf das durch diese aufgenommene Bild der tatsächlich produzierten Packungen 10 einbeziehen. So weisen die Prüforgane 11 der Prüfvorrichtung in der Regel optische Abbildungsfehler auf bzw. produzieren solche Abbildungsfehler. Derartige Abbildungsfehler können in das Referenzbild 24b einberechnet werden, sodass diese bei einem Vergleich des Referenzbildes 24b mit den tatsächlich produzierten Packungen 10 automatisch unbeachtet bleiben.

Auch die elektronischen Bauteile der Prüfungsorgane 11 können Fehler produzieren, die zu gegenüber der Realität verzerrenden Abbildungen führen.

Neben diesen Korrekturparametern, die Einflüsse der Prüfvorrichtung auf das von ihnen aufgenommenen Abbild der jeweils zu prüfenden Packung einbeziehen, können alternativ oder zusätzlich vorhersehbare, systematische Abweichungen der tatsächlich produzierten Zigarettenpackungen 10 von dem in der oben beschriebenen Weise errechneten (virtuellen) Abbild 24a der Zigarettenpackung 10 einbezogen werden.

Beispielsweise weicht die Faltung des Zuschnitts 22 entlang der Faltlinien in der tatsächlichen Produktion in der Regel von einer theoretisch errechneten Faltung ab. So weisen die tatsächlichen Faltungen beispielsweise Rundungen auf, die bei der Ermittlung des Referenzbildes 24b mit eingerechnet werden.

Sowohl bei der oben beschriebenen manuellen Eingabe der Daten zu dem Musterzuschnitt 22 als auch bei der beschriebenen automatischen Erfassung des Musterzuschnitts 22 ist es im Übrigen möglich, einzelne, besonders komplizierte Bildobjekte 23e, 23d bei der nachfolgenden Prüfung der produzierten Packungen 10 außer Betracht zu lassen. Die Bildobjekte 23e, 23d können zu diesem Zweck automatisch als bei der weiteren Prüfung außer Acht zu lassen erkannt werden. Denkbar ist aber auch, dass der Benutzer am Bildschirm die Bildobjekte 23e, 23d manuell auswählt und diese Bildobjekte 23d, 23e aufgrund dieser manuellen Auswahl außer Betracht bleiben.

**Bezugszeichenliste**

| | | | |
|---|---|---|---|
| 10 | Packung | 24b | Referenzbild |
| 11 | CCD-Kamera | 25 | Erfassungsorgan |
| 12 | Trockenrevolver | 25a-c | Bildbereiche |
| 13 | Ausschleuseeinrichtung | 26 | Beleuchtungseinrichtung |
| 14 | Banderole | 27a-d | Prüfmethoden |
| 14a | Banderolenart | | Packungsoberseite |
| 14b | Banderolenart | 28a-c | Prüfmethoden |
| 14c | Banderolenart | | Packungsboden |
| 15 | Fördertrum | 29 | Oberseite |
| 16 | Ausschleuserad | 29a-c | Oberseite |
| 17 | Zigarettenförderer | 30 | Bodenseite |
| 18 | Bodenfaltung | 30a-b | Bodenseite |
| 18a | Bodenfaltung | 31a-c | Kombination |
| 18b | Bodenfaltung | | Oberseite/Banderole |
| 19 | gepunktete Linie | 32a-b | Kombination |
| 20 | gepunktete Linie | | Bodenseite/Faltung |
| 21a | Alternative | 33a-d | Kästchen |
| 21b | Alternative | 34a-d | Kästchen |
| 21c | Hilfedarstellung | 35 | gepunktete Linie |
| 21d | Hilfedarstellung | | |
| 22 | Musterzuschnitt | | |
| 22a | Abbild des Musterzuschnitts | | |
| 23a | Bildobjekt | | |
| 23b | Bildobjekt | | |
| 23c | Bildobjekt | | |
| 23d | Bildobjekt | | |
| 23e | Bildobjekt | | |
| 23f | Banderolenabbild | | |
| 24a | 3d-Bild | | |

## Patentansprüche

1. Verfahren zur optischen Prüfung von bei der Herstellung und/oder Verpackung von Zigaretten zu prüfenden Objekten - Prüfobjekte -, insbesondere von Zigarettenpackungen (10) und/oder Zuschnitten (14, 22) für Zigarettenpackungen (10) und/oder Aufdrucken und/oder Druckträgern auf oder für Zigarettenpackungen (10) mithilfe einer geeigneten Prüfvorrichtung, **gekennzeichnet durch** folgende Merkmale:
a) auf einem Anzeigemittel wird zu mindestens einem das Prüfobjekt (10, 14, 18, 29, 30) insbesondere in optischer Hinsicht charakterisierenden Merkmal ein Satz von zu dem entsprechenden Merkmal in einem Speicher hinterlegten Merkmalswertalternativen (31a-c; 32a-b) angezeigt,
b) mittels einer Eingabeeinrichtung wird einer der angezeigten Merkmalswerte des Satzes von Merkmalswertalternativen (31a-c; 32a-b) ausgewählt,
c) die Prüfvorrichtung wird für die nachfolgenden Prüfvorgänge automatisch eingerichtet bzw. voreingestellt, wobei die Auswahl des Merkmalswerts (31a; 32a) die Einrichtung der Prüfvorrichtung beeinflusst,
d) die Prüfobjekte (10, 14, 18, 29, 30) werden mit der eingerichteten Prüfvorrichtung geprüft.

2. Verfahren gemäß Anspruch 1, **dadurch gekennzeichnet, dass** nach Maßgabe des ausgewählten Merkmalswerts (31a; 32a) oder - im Falle einer Auswahl mehrerer, jeweils einem anderem Merkmal zugeordneter Merkmalswerte - nach Maßgabe der mehreren ausgewählten Merkmalswerte (31a; 32a) der verschiedenen Merkmale, aus einer in einem Speicher hinterlegten Anzahl von Prüfmethoden (27a-d; 28a-c), mit denen Prüfobjekte (10, 14, 18, 29, 30) mit der Prüfvorrichtung geprüft werden können, automatisch mindestens eine für das zu prüfende Prüfobjekt (10, 14, 18, 29, 30) geeignete Prüfmethode (27c; 28a) ausgewählt wird, oder dass aus dieser Anzahl Prüfmethoden (27a-d; 28a-c) nach dieser Maßgabe mehrere für das zu prüfende Prüfobjekt (10, 14, 18, 29, 30) geeignete Prüfmethoden auf dem Anzeigemittel auswählbar angezeigt werden, sodass ein Benutzer eine oder gegebenenfalls mehrere der angezeigten Prüfmethoden auswählen kann.

3. Verfahren gemäß Anspruch 2, **dadurch gekennzeichnet, dass** die Prüfung der Prüfobjekte (10, 14, 18, 29, 30) nach Maßgabe der mindestens einen, automatisch oder von dem Benutzer ausgewählten Prüfmethode (27c; 28a) erfolgt.

4. Verfahren gemäß Anspruch 2 oder 3, **dadurch gekennzeichnet, dass** die Prüfmethoden Prüfalgorithmen umfassen, mithilfe derer im Rahmen der Prüfung der Prüfobjekte (10, 14, 18, 29, 30) eine Auswertung von von der Prüfvorrichtung aufgenommenen Bildern der Prüfobjekte (10, 14, 18, 29, 30) erfolgt.

5. Verfahren gemäß Anspruch 2, 3 oder 4, **dadurch gekennzeichnet, dass** Parameter, die von der Prüfvorrichtung im Rahmen der Prüfung der Prüfobjekte (10, 14, 18, 29, 30) verwendet werden, zuvor nach Maßgabe der mindestens einen, automatisch oder von dem Benutzer ausgewählten Prüfmethode aus einer Anzahl von jeweils für die Prüfvorrichtung in einem Datenspeicher hinterlegten Parametern ausgewählt und an die Prüfvorrichtung übergeben werden.

6. Verfahren gemäß einem oder mehreren der vorhergehenden Ansprüche, **dadurch gekennzeichnet, dass** eine Beleuchtungseinrichtung (26) und/oder eine Auswerteeinrichtung und/oder ein Lichtdetektor (11) der Prüfvorrichtung automatisch eingerichtet bzw. voreingestellt wird, wobei Parameter für die Beleuchtungseinrichtung (26) und/oder die Auswerteeinrichtung und/oder den Lichtdetektor (11), die während der Prüfung der Prüfobjekte (10, 14, 18, 29, 30) von der Beleuchtungseinrichtung (26) bzw. der Auswerteeinrichtung bzw. dem Lichtdetektor (11) verwendet werden, zuvor automatisch ermittelt werden, indem ein insbesondere an der späteren Prüfposition der Prüfobjekte (10, 14, 18, 29, 30) angeordnetes Referenzprüfobjekt mit Licht der Beleuchtungseinrichtung (26) beleuchtet wird, von dem Lichtdetektor (11) mindestens ein Bild des beleuchteten Referenzprüfobjektes aufgenommen wird, das aufgenommene Bild ausgewertet wird, und, falls das aufgenommene Bild vorbestimmten Kriterien nicht entspricht, die vorgenannten Schritte mit veränderten Einstellungen der Beleuchtungseinrichtung (26) wiederholt werden, insbesondere veränderter Lichtstärke eines Beleuchtungsorgans der Beleuchtungseinrichtung (26), bis das aufgenommene Bild den vorbestimmten Kriterien entspricht.

7. Verfahren gemäß einem oder mehreren der vorhergehenden Ansprüche, **dadurch gekennzeichnet, dass** das Prüfobjekt (10, 14, 18, 29, 30) auf dem Anzeigemittel bildlich dargestellt wird, dass mit der Eingabeeinrichtung mindestens ein Bereich (20) ausgewählt werden kann, in dem das Prüfobjekt (10, 14, 18, 29, 30) geprüft werden soll und/oder ein Bereich (20), in dem das Prüfobjekt (10, 14, 18, 29, 30) nicht geprüft werden soll, dass dieser ausgewählte Bereich (19, 20) auf dem Anzeigemittel optisch hervorgehoben wird, und dass nur der ausgewählte Bereich (20) bzw. nur der nicht ausgewählte Restbereich mit der Prüfvorrichtung geprüft wird.

8. Verfahren gemäß einem oder mehreren der vorhergehenden Ansprüche, **dadurch gekennzeichnet, dass** die Prüfobjekte (10, 14, 18, 29, 30) jeweils Packungsoberseiten (29) einer Zigarettenpackung (10) mit darauf angeordneter Banderole (14) sind, wobei als Satz von Merkmalswertalternativen ein Satz von verschiedenen Kombinationen (31a-c) von Oberseiten (29a-c) mit darauf angeordneten Banderolen (14a-c) auswählbar angezeigt wird, und/oder dass die Prüfobjekte (10, 14, 18, 29, 30) jeweils Packungsbodenseiten (30) mit Bodenfaltungen (18) einer Zigarettenpackung (10) sind, wobei als Satz von Merkmalswertalternativen (31a-c; 32a-b) ein Satz von verschiedenen Kombinationen (32a-b) von Bodenseiten (30a-b) mit Bodenfaltung (18a-b) auswählbar angezeigt wird.

9. Verfahren gemäß einem oder mehreren der vorhergehenden Ansprüche, **dadurch gekennzeichnet, dass** auf dem Anzeigemittel Hilfedarstellungen (21a-d), etwa Hilfebilder und/oder Hilfetexte, angezeigt werden, insbesondere nach Auswahl eines geeigneten angezeigten Feldes mithilfe der Eingabeeinrichtung, die Hinweise zu den Merkmalswertalternativen (31a-c; 32a-b) und/oder zu den auswählbaren Bereichen (11) umfassen.

10. Verfahren zur optischen Prüfung von bei der Verpackung von Zigaretten zu prüfenden Objekten - Prüfobjekte -, nämlich von Zigarettenpackungen (10), mithilfe einer geeigneten Prüfvorrichtung, **gekennzeichnet durch** folgende Merkmale:
a) Merkmalswerte von das Prüfobjekt (10, 14, 18, 29, 30) insbesondere in optischer Hinsicht charakterisierenden Merkmalen werden mittels einer Eingabeeinrichtung, etwa einer Tastatur oder einem Zeigegerät, in einem Datenspeicher hinterlegt, wobei die Merkmalswerte Konstruktionsdaten eines Zuschnitts (22) für das Prüfobjekt (10, 14, 18, 29, 30) umfassen,
b) aus den Konstruktionsdaten des Zuschnitts (22) und gegebenenfalls weiteren charakteristischen Merkmalen für das Prüfobjekt (10, 14, 18, 29, 30) wird mithilfe von Algorithmen ein Bild (24b) eines aus dem Zuschnitt (22) faltbaren Referenzprüfobjekts ermittelt, wobei in die Ermittlung des Referenzbildes (24b) Korrekturparameter einfließen, mit denen Einflüsse der Prüfvorrichtung auf das Abbild des während eines Prüfungsvorgangs erfassten Prüfobjektes (10, 14, 18, 29, 30) einbezogen werden, oder wobei in die Ermittlung des Referenzbildes (24b) vorhersehbare, systematische Abweichungen der realen, hergestellten bzw. herzustellenden Prüfobjekte (10, 14, 18, 29, 30) von einem idealen Prüfobjekt (10, 14, 18, 29, 30) einbezogen werden,
c) die Prüfvorrichtung wird für die nachfolgenden Prüfvorgänge eingerichtet bzw. voreingestellt, wobei die hinterlegten Merkmalswerte die Einrichtung der Prüfvorrichtung beeinflussen,
d) die Prüfobjekte (10, 14, 18, 29, 30) werden mit der eingerichteten Prüfvorrichtung geprüft, wobei das ermittelte Bild (24b) des aus dem Zuschnitt (22) faltbaren Referenzprüfobjekts bei der nachfolgenden Prüfung der Prüfobjekte (10, 14, 18, 29, 30) als Referenzbild verwendet wird, das mindestens bereichsweise jeweils verglichen wird mit mindestens einem von der Prüfvorrichtung aufgenommen Bild oder Teilbild des jeweiligen Prüfobjekts (10, 14, 18, 29, 30).

11. Verfahren gemäß Anspruch 10, **dadurch gekennzeichnet, dass** auf dem Referenzprüfobjekt oder auf dem Zuschnitt (22) für das Referenzprüfobjekt angeordnete Bildobjekte (23a-f) und/oder alphanumerische Zeichen bei der automatischen oder teilautomatischen Ermittlung der Werte der charakteristischen Merkmale erkannt werden.

12. Verfahren gemäß Anspruch 10, **dadurch gekennzeichnet, dass** ein oder mehrere Bereiche des Zuschnitts (22) für das Referenzprüfobjekt, insbesondere an dem Zuschnitt für das Referenzprüfobjekt angeordnete Bildobjekte (23d,e) und/oder alphanumerische Zeichen, bei dem im Rahmen der nachfolgenden Prüfung der Prüfobjekte (10, 14, 18, 29, 30) erfolgenden Vergleich der Prüfobjekte (10, 14, 18, 29, 30) mit dem Referenzprüfobjekt außer Betracht bleiben bzw. unbeachtet bleiben.

13. Verfahren gemäß Anspruch 12, **dadurch gekennzeichnet, dass** ein oder mehrere der Bereiche, insbesondere an dem Zuschnitt (22) für das Referenzprüfobjekt angeordnete Bildobjekte (23d,e) und/oder alphanumerische Zeichen, mittels der Eingabeeinrichtung manuell als bei der nachfolgenden Prüfung der Prüfobjekte (10, 14, 18, 29, 30) außer Betracht bleibend auswählbar sind.

14. Prüfvorrichtung zur optischen Prüfung von bei der Herstellung und/oder Verpackung von Zigaretten zu prüfenden Objekten - Prüfobjekte -, insbesondere von Zigarettenpackungen (10) und/oder von Zuschnitten (22) für Zigarettenpackungen (10) und/oder Aufdrucken und/oder Druckträgern auf oder für Zigarettenpackungen (10), zur Durchführung des Verfahrens gemäß Anspruch 1, mit folgenden Merkmalen:
a) einer Anzeigeeinrichtung, auf der zu mindestens einem das Prüfobjekt (10, 14, 18, 29, 30) insbesondere in optischer Hinsicht charakterisierenden Merkmal ein Satz von zu dem entsprechenden Merkmal in einem Datenspeicher hinterlegten Merkmalswertalternativen (31a-c, 32a-b) anzeigbar ist,
b) einer Eingabeeinrichtung, mit der ein Merkmalswert des angezeigten Satzes von Merkmalswertalternativen (31a-c, 32a-b) auswählbar ist,
c) einer Steuereinrichtung, mit der die Prüfvorrichtung automatisch einrichtbar ist, wobei die Auswahl des Merkmalswerts die Einrichtung der Prüfvorrichtung beeinflusst.

## Claims

1. A method for the optical testing of objects to be tested - test objects - during the production and/or packaging of cigarettes, in particular of cigarette packs (10) and/or blanks (14, 22) for cigarette packs (10) and/or overprints and/or print substrates on or for cigarette packs (10), with the aid of a suitable testing device, **characterized by** the following features:
a) for at least one feature characterizing the test object (10, 14, 18, 29, 30), in particular in a visual respect, a set of feature-value alternatives (31a-c: 32a-b) for the corresponding feature that are stored in a memory is displayed on a display means,
b) by means of an input device one of the displayed feature values of the set of feature-value alternatives (31a-c: 32a-b) is selected,
c) the testing device is automatically set up or preset for the subsequent testing operations, with the selection of the feature value (31a; 32a) influencing the setting up of the testing device,
d) the test objects (10, 14, 18, 29, 30) are tested with the set-up testing device.

2. The method as claimed in claim 1, **characterized in that**, in accordance with the selected feature value (31a; 32a) or - in the case of a selection of multiple feature values respectively assigned to a different feature - in accordance with the multiple selected feature values (31a; 32a) of the various features, at least one test method (27c; 28a) that is suitable for the test object (10, 14, 18, 29, 30) to be tested is automatically selected from a number of test methods (27a-d; 28a-c) which are stored in a memory and by which test objects (10, 14, 18, 29, 30) can be tested with the testing device, or **in that**, in accordance with the foregoing, from this number of test methods (27a-d; 28a-c) multiple test methods that are suitable for the test object (10, 14, 18, 29, 30) to be tested are displayed selectably on the display means, so that a user can select one or possibly more of the test methods displayed.

3. The method as claimed in claim 2, **characterized in that** the testing of the test objects (10, 14, 18, 29, 30) is performed in accordance with the at least one test method (27c; 28a) selected automatically or by the user.

4. The method as claimed in claim 2 or 3, **characterized in that** the test methods comprise test algorithms with the aid of which an evaluation of images of the test objects (10, 14, 18, 29, 30) recorded by the testing device is performed in the course of the testing of the test objects (10, 14, 18, 29, 30).

5. The method as claimed in claim 2, 3 or 4, **characterized in that** parameters that are used by the testing device in the course of the testing of the test objects (10, 14, 18, 29, 30) are selected in advance in accordance with the at least one test method selected automatically or by the user from a number of parameters respectively stored for the testing device in a data memory and are transferred to the testing device.

6. The method as claimed in one or more of the preceding claims, **characterized in that** an illuminating device (26) and/or an evaluating device and/or a light detector (11) of the testing device is automatically set up or preset, wherein parameters for the illuminating device (26) and/or the evaluating device and/or the light detector (11) that are used by the illuminating device (26) or the evaluating device or the light detector (11) during the testing of the test objects (10, 14, 18, 29, 30) are automatically determined in advance, **in that** a reference test object, arranged in particular at the later testing position of the test objects (10, 14, 18, 29, 30), is illuminated with light of the illuminating device (26), at least one image of the illuminated reference test object is recorded by the light detector (11), the recorded image is evaluated and, if the recorded image does not correspond to predetermined criteria, the aforementioned steps are repeated with changed settings of the illuminating device (26), in particular changed light intensity of an illuminating element of the illuminating device (26), until the recorded image corresponds to the predetermined criteria.

7. The method as claimed in one or more of the preceding claims, **characterized in that** the test object (10, 14, 18, 29, 30) is graphically displayed on the display means, **in that** at least one region (20) in which the test object (10, 14, 18, 29, 30) is to be tested and/or one region (20) in which the test object (10, 14, 18, 29, 30) is not to be tested can be selected with the input device, **in that** this selected region (19, 20) is visually highlighted on the display means, and **in that** only the selected region (20) or only the non-selected remaining region is tested with the testing device.

8. The method as claimed in one or more of the preceding claims, **characterized in that** the test objects (10, 14, 18, 29, 30) are respectively pack top sides (29) of a cigarette pack (10) with a banderol (14) arranged on them, a set of various combinations (31a-c) of top sides (29a-c) with banderols (14a-c) arranged on them is displayed selectably as a set of feature-value alternatives, and/or **in that** the test objects (10, 14, 18, 29, 30) are respectively pack bottom sides (30) with bottom foldings (18) of a cigarette pack (10), a set of various combinations (32a-b) of bottom sides (30a-b) with bottom folding (18a-b) being displayed selectably as a set of feature-value alternatives (31a-c; 32a-b).

9. The method as claimed in one or more of the preceding claims, **characterized in that**, in particular after selection of a suitable displayed field with the aid of the input device, help displays (21a-d), for instance help images and/or help texts, are displayed on the display means, comprising tips on the feature-value alternatives (31a-c; 32a-b) and/or the selectable regions (11).

10. A method for the optical testing of objects to be tested - test objects - during the packaging of cigarettes, namely of cigarette packs (10), with the aid of a suitable testing device, **characterized by** the following features:
a) feature values of features characterizing the test object (10, 14, 18, 29, 30), in particular in a visual respect, are stored by means of an input device, for instance a keyboard or a pointing device, in a data memory, wherein the feature values comprise design data of a blank (22) for the test object (10. 14, 18, 29, 30),
b) with the aid of algorithms, an image (24b) of a reference test object that can be folded from the blank (22) is determined from the design data of the blank (22) and possibly from further characteristic features for the test object (10, 14, 18, 29, 30), wherein correction parameters by which influences of the testing device on the depiction of the test object (10, 14, 18, 29, 30) recorded during a testing operation are addressed, or wherein foreseeable systematic deviations of the actual test objects (10, 14, 18, 29, 30) produced or to be produced from an ideal test object (10, 14, 18, 29, 30) are included in the determination of the reference image (24b).
c) the testing device is set up or preset for the subsequent testing operations, with the stored feature values influencing the setting up of the testing device,
d) the test objects (10, 14, 18, 29, 30) are tested with the set-up testing device, wherein the determined image (24b) of the reference test object that can be folded from the blank (22) is used in the subsequent testing of the test objects (10, 14, 18, 29, 30) as a reference image, which is respectively compared at least in certain regions with at least one image or part-image of the respective test object (10, 14, 18, 29, 30) that is recorded by the testing device.

11. The method as claimed in claim 10, **characterized in that** image objects (23a-f) and/or alphanumeric characters arranged on the reference test object or on the blank (22) for the reference test object are detected in the automatic or semi-automatic determination of the values of the characteristic features.

12. The method as claimed in claim 10, **characterized in that** one or more regions of the blank (22) for the reference test object, in particular image objects (23d,e) and/or alphanumeric characters arranged on the blank for the reference test object, is or are disregarded or ignored in the comparison of the test objects (10, 14, 18, 29, 30) with the reference test object in the course of the subsequent testing of the test objects (10, 14, 18, 29, 30).

13. The method as claimed in claim 12, **characterized in that** one or more of the regions, in particular image objects (23d,e) and/or alphanumeric characters arranged on the blank (22) for the reference test object, can be manually selected, by means of the input device, to be disregarded in the subsequent testing of the test objects (10, 14, 18, 29, 30).

14. A testing device for the optical testing of objects to be tested - test objects - during the production and/or packaging of cigarettes, in particular of cigarette packs (10) and/or blanks (22) for cigarette packs (10) and/or overprints and/or print substrates on or for cigarette packs (10), for carrying out the method as claimed in claim 1, with the following features:
a) a display device on which, for at least one feature characterizing the test object (10, 14, 18, 29, 30), in particular in a visual respect, a set of feature-value alternatives (31a-c, 32a-b) for the corresponding feature that are stored in a data memory can be displayed,
b) an input device with which a feature value of the displayed set of feature-value alternatives (31a-c, 32a-b) can be selected,
c) a control device with which the testing device can be automatically set up, with the selection of the feature value influencing the setting up of the testing device.

## Revendications

1. Procédé d'examen optique d'objets à examiner lors de la fabrication et/ou de l'emballage de cigarettes - objets à contrôler -, en particulier de paquets de cigarettes (10) et/ou de découpes (14, 22) destinées à des paquets de cigarettes (10) et/ou d'impressions et/ou de supports d'impression sur ou pour des paquets de cigarettes (10) à l'aide d'un dispositif d'examen approprié, **caractérisé par** les caractéristiques suivantes :
a) sur un moyen d'affichage, est affiché, pour au moins un attribut caractérisant l'objet à contrôler (10, 14, 18, 29, 30) en particulier du point de vue optique, un ensemble d'alternatives de valeurs d'attribut (31a-c ; 32a-b) stockées dans une mémoire pour l'attribut correspondant,
b) l'une des valeurs d'attribut affichées de l'ensemble d'alternatives de valeurs d'attribut (31a-c ; 32a-b) est sélectionnée au moyen d'un dispositif d'entrée,
c) le dispositif d'examen est automatiquement réglé ou préréglé pour les opérations d'examen suivantes, dans lequel la sélection de la valeur d'attribut (31a ; 32a) influence le réglage du dispositif d'examen,
d) les objets à contrôler (10, 14, 18, 29, 30) sont contrôlés au moyen du dispositif d'examen réglé.

2. Procédé selon la revendication 1, **caractérisé en ce que**, conformément à la valeur d'attribut sélectionnée (31a ; 32a) ou - dans le cas d'une sélection de plusieurs valeurs d'attribut respectivement associées à un autre attribut - conformément aux multiples valeurs d'attribut (31a ; 32a) sélectionnées des différents attributs, parmi un certain nombre de méthodes d'examen (27a-d ; 28a-c) stockées dans une mémoire, avec lesquelles des objets à contrôler (10, 14, 18, 29, 30) peuvent être contrôlés au moyen du dispositif d'examen, au moins une méthode d'examen (27c ; 28a) adaptée à l'objet à contrôler (10, 14, 18, 29, 30) devant être examiné est automatiquement sélectionnée, ou **en ce que**, parmi ledit nombre de méthodes d'examen (27a-d ; 28a-c), conformément à cette spécification, plusieurs méthodes d'examen adaptées à l'objet à contrôler (10, 14, 18, 29, 30) devant être examiné sont affichées de manière sélectionnable sur le moyen d'affichage, de sorte qu'un utilisateur peut sélectionner une ou, le cas échéant, plusieurs des méthodes d'examen affichées.

3. Procédé selon la revendication 2, **caractérisé en ce que** le contrôle des objets à contrôler (10, 14, 18, 29, 30) est effectué conformément à ladite au moins une méthode d'examen (27c ; 28a) sélectionnée automatiquement ou par l'utilisateur.

4. Procédé selon la revendication 2 ou 3, **caractérisé en ce que** les méthodes d'examen comprennent des algorithmes d'examen à l'aide desquels une évaluation d'images des objets à contrôler (10, 14, 18, 29, 30), acquises par le dispositif d'examen, est effectuée dans le cadre du contrôle des objets à contrôler (10, 14, 18, 29, 30).

5. Procédé selon la revendication 2, 3 ou 4, **caractérisé en ce que** des paramètres qui sont utilisés par le dispositif d'examen dans le cadre du contrôle des objets à contrôler (10, 14, 18, 29, 30) sont préalablement sélectionnés conformément à ladite au moins une méthode d'examen sélectionnée automatiquement ou par l'utilisateur, parmi un certain nombre de paramètres respectifs stockés dans une mémoire de données pour le dispositif d'examen et transférés au dispositif d'examen.

6. Procédé selon l'une ou plusieurs des revendications précédentes, **caractérisé en ce qu'**un dispositif d'éclairage (26) et/ou un dispositif d'évaluation et/ou un photodétecteur (11) du dispositif d'examen est automatiquement réglé ou préréglé, dans lequel des paramètres du dispositif d'éclairage (26) et/ou du dispositif d'évaluation et/ou du photodétecteur (11), qui sont utilisés par le dispositif d'éclairage (26) ou le dispositif d'évaluation ou le photodétecteur (11) lors du contrôle des objets à contrôler (10, 14, 18, 29, 30), sont déterminés automatiquement à l'avance, en faisant en sorte qu'un objet de référence à contrôler, disposé en particulier à la position d'examen suivante des objets à contrôler (10, 14, 18, 29, 30), soit éclairé avec la lumière du dispositif d'éclairage (26), qu'au moins une image de l'objet de référence à contrôler éclairé soit acquise par le photodétecteur (11), que l'image acquise soit évaluée et, dans le cas où l'image acquise ne répond pas à des critères prédéterminés, que les étapes ci-dessus soient répétées avec des réglages modifiés du dispositif d'éclairage (26), en particulier une intensité lumineuse modifiée d'un organe d'éclairage du dispositif d'éclairage (26), jusqu'à ce que l'image acquise réponde aux critères prédéterminés.

7. Procédé selon l'une ou plusieurs des revendications précédentes, **caractérisé en ce que** l'objet à contrôler (10, 14, 18, 29, 30) est représenté sur le moyen d'affichage sous forme d'image, **en ce qu'**il est possible de sélectionner au moyen du dispositif d'entrée au moins une zone (20) dans laquelle l'objet à contrôler (10, 14, 18, 29, 30) doit être contrôlé et/ou une zone (20) dans laquelle l'objet à contrôler (10, 14, 18, 29, 30) ne doit pas être contrôlé, **en ce que** ladite zone sélectionnée (19, 20) est mise en évidence optiquement sur le moyen d'affichage, et **en ce que** seule la zone sélectionnée (20) ou seule la zone non sélectionnée restante est contrôlée au moyen du dispositif d'examen.

8. Procédé selon l'une ou plusieurs des revendications précédentes, **caractérisé en ce que** les objets à contrôler (10, 14, 18, 29, 30) sont respectivement des faces supérieures de paquet (29) d'un paquet de cigarettes (10) sur lesquels sont disposées des banderoles (14), dans lequel un ensemble de différentes combinaisons (31a-c) de faces supérieures (29a-c) sur lesquelles sont disposées des banderoles (14a-c) est affiché de manière sélectionnable en tant qu'ensemble d'alternatives de valeurs d'attribut, et/ou **en ce que** les objets à contrôler (10, 14, 18, 29, 30) sont respectivement des faces de fond de paquet (30) présentant des plis de fond (18) d'un paquet de cigarettes (10), dans lequel un ensemble de combinaisons différentes (32a-b) de faces de fond (30a-b) présentant un pli de fond (18a-b) est affiché de manière sélectionnable en tant qu'ensemble d'alternatives de valeurs d'attribut (31a-c ; 32a-b).

9. Procédé selon l'une ou plusieurs des revendications précédentes, **caractérisé en ce que** des représentations d'aide (21a-d), telles que des images d'aide et/ou des textes d'aide, sont affichées sur le moyen d'affichage, en particulier après la sélection d'un champ affiché approprié à l'aide du dispositif d'entrée, lesdites représentations comprenant des indications concernant les alternatives de valeurs d'attribut (31a-c ; 32a-b) et/ou concernant les zones sélectionnables (11).

10. Procédé d'examen optique d'objets à examiner lors de l'emballage de cigarettes - objets à contrôler -, à savoir des paquets de cigarettes (10), à l'aide d'un dispositif d'examen approprié, **caractérisé par** les caractéristiques suivantes :
a) des valeurs d'attribut d'attributs caractérisant l'objet à contrôler (10, 14, 18, 29, 30), en particulier d'un point de vue optique, sont stockées dans une mémoire de données au moyen d'un dispositif d'entrée, par exemple d'un clavier ou d'un dispositif de pointage, dans lequel les valeurs d'attribut comprennent des données de conception d'une découpe (22) pour l'objet à contrôler (10, 14, 18, 29, 30),
b) une image (24b) d'un objet de référence à contrôler pouvant être plié à partir de la découpe (22) est déterminée à l'aide d'algorithmes à partir des données de conception de la découpe (22) et, le cas échéant, d'autres attributs caractéristiques de l'objet à contrôler (10, 14, 18, 29, 30), dans lequel des paramètres de correction sont attribués à la détermination de l'image de référence (24b), et permettent de prendre en compte des influences du dispositif d'examen sur l'image formée de l'objet à contrôler (10, 14, 18, 29, 30) détecté au cours d'une opération d'examen, ou dans lequel, lors de la détermination de l'image de référence (24b), des écarts prévisibles et systématiques des objets à contrôler réels fabriqués ou à fabriquer (10, 14, 18, 29, 30) par rapport à un objet à contrôler idéal (10, 14, 18, 29, 30), sont pris en compte,
c) le dispositif d'examen est réglé ou préréglé pour les opérations d'examen suivantes, dans lequel les valeurs d'attribut stockées ont une influence sur le réglage du dispositif d'examen,
d) les objets à contrôler (10, 14, 18, 29, 30) sont contrôlés au moyen du dispositif d'examen réglé, dans lequel l'image déterminée (24b) de l'objet de référence à contrôler pouvant être plié à partir de la découpe (22) est utilisée comme image de référence lors du contrôle suivant des objets à contrôler (10, 14, 18, 29, 30), ladite image étant comparée à chaque fois au moins par zones avec au moins une image ou une image partielle de l'objet à contrôler (10, 14, 18, 29, 30) respectif acquise par le dispositif d'examen.

11. Procédé selon la revendication 10, **caractérisé en ce que** des objets images (23a-f) et/ou des caractères alphanumériques disposés sur l'objet de référence à contrôler ou sur la découpe (22) pour l'objet de référence à contrôler, sont reconnus lors de la détermination automatique ou semi-automatique des valeurs des attributs caractéristiques.

12. Procédé selon la revendication 10, **caractérisé en ce qu'**une ou plusieurs zones de la découpe (22) pour l'objet de référence à contrôler, en particulier des objets images (23d,e) et/ou des caractères alphanumériques disposés sur la découpe pour l'objet de référence à contrôler, sont ignorées ou négligées lors de la comparaison des objets à contrôler (10, 14, 18, 29, 30) avec l'objet à contrôler de référence, effectuée dans le cadre du contrôle suivant des objets à contrôler (10, 14, 18, 29, 30).

13. Procédé selon la revendication 12, **caractérisé en ce qu'**une ou plusieurs des zones, en particulier des objets images (23d,e) et/ou des caractères alphanumériques disposés sur la découpe (22) pour l'objet de référence à contrôler, peuvent être sélectionnées manuellement au moyen du dispositif d'entrée comme restant ignorées lors du contrôle suivant des objets à contrôler (10, 14, 18, 29, 30).

14. Dispositif d'examen pour le contrôle optique d'objets à examiner lors de la fabrication et/ou de l'emballage de cigarettes - objets à contrôler -, en particulier de paquets de cigarettes (10) et/ou de découpes (22) destinées à des paquets de cigarettes (10) et/ou d'impressions et/ou de supports d'impression sur ou pour des paquets de cigarettes (10), destiné à la mise en œuvre du procédé selon la revendication 1, présentant les caractéristiques suivantes :
a) un dispositif d'affichage sur lequel il est possible d'afficher, pour au moins un attribut caractérisant l'objet à contrôler (10, 14, 18, 29, 30) en particulier d'un point de vue optique, un ensemble d'alternatives de valeurs d'attribut (31a-c, 32a-b) stockées dans une mémoire de données pour l'attribut correspondant,
b) un dispositif d'entrée permettant de sélectionner une valeur d'attribut de l'ensemble affiché d'alternatives de valeurs d'attribut (31a-c, 32a-b),
c) un dispositif de commande permettant le réglage automatique du dispositif d'examen, dans lequel la sélection de la valeur d'une caractéristique influence le réglage du dispositif d'examen.
